# EUROPÄISCHE PATENTANMELDUNG

(11) **EP 4 803 559 A1**
(43) Veröffentlichungstag der Anmeldung: **09.09.2026**
(21) Anmeldenummer: 26158851.1
(22) Anmeldetag: 16.02.2026
(51) Int. Cl.: C08G 18/10, C08G 18/32, C08G 18/44, C08G 18/48, C08G 18/76

(54) **THERMOPLASTISCHES POLYMER MIT FORMGEDÄCHTNISEIGENSCHAFTEN MIT HOHER SCHALTTEMPERATUR, HIERAUS ERZEUGTES POLYMER-FORMTEIL UND VERFAHREN ZU SEINER HERSTELLUNG**

(30) Priorität: 04.03.2025 DE 102025108055; 06.06.2025 DE 102025122443
(71) Anmelder: Fraunhofer-Gesellschaft zur Förderung der angewandten Forschung e.V., 80686 München (DE)
(72) Erfinder: Pretsch, Dr., Thorsten, 14476 Potsdam-Golm (DE); Galambos, Theodor, 14476 Potsdam-Golm (DE); Temme, Kerim, 14476 Potsdam-Golm (DE); Chalissery, Dr., Dilip, 14476 Potsdam-Golm (DE)
(74) Vertreter: Lichti - Patentanwälte Partnerschaft mbB

(57) **Zusammenfassung**

Es wird ein thermoplastisches Formgedächtnispolymer vorgeschlagen, welches einerseits Hartsegmente mit Polyurethaneinheiten oder mit Polyharnstoffeinheiten, welche durch Polyaddition der Isocyanatgruppen eines Diisocyanates mit den Hydroxygruppen bzw. mit den Aminogruppen eines als Kettenverlängerer dienenden Di-, Tri- oder Polyols bzw. Di-, Tri- und/oder Polyamins erhalten worden sind, und andererseits Weichsegmente aufweist, welche Polyethereinheiten oder Polycarbonateinheiten enthalten, welche jeweils unter Bildung von Urethangruppen mit den Hartsegmenten verbunden sind. Die Erfindung sieht vor, dass der Anteil an Hartsegmenten des thermoplastischen Polymers mit Formgedächtniseigenschaften wenigstens 50 Mass.-% beträgt, wobei wenigstens ein als Kettenverlängerer dienendes Di-, Tri- und/oder Polyol bzw. Di-, Tri- und/oder Polyamin der Hartsegmente von einer cyclischen, heterocyclischen oder aromatischen Verbindung gebildet ist. Die Schalttemperatur eines solchen thermoplastischen Polymers mit Formgedächtniseigenschaften beträgt wenigstens 90°C, wobei es insbesondere eine thermische Beständigkeit von wenigstens 200°C aufweist. Die Erfindung betrifft ferner ein Polymer-Formteil aus einem solchen Formgedächtnispolymer sowie ein Verfahren zu seiner Herstellung.

## Beschreibung

Die Erfindung betrifft ein thermoplastisches Polymer mit Formgedächtniseigenschaften, enthaltend:
(a) Hartsegmente, welche
   - Polyurethaneinheiten enthalten, welche durch Polyaddition der Isocyanatgruppen wenigstens eines Diisocyanates mit den Hydroxygruppen wenigstens eines als Kettenverlängerer dienenden Di-, Tri- und/oder Polyols unter Bildung von Urethangruppen erhalten worden sind, und/oder
   - Polyharnstoffeinheiten enthalten, welche durch Polyaddition der Isocyanatgruppen wenigstens eines Diisocyanates mit den Aminogruppen wenigstens eines als Kettenverlängerer dienenden Di-, Tri- und/oder Polyamins unter Bildung von Harnstoffderivatgruppen erhalten worden sind;
(b) Weichsegmente, welche
   - Polyethereinheiten enthalten, wobei die Polyethereinheiten durch Polyaddition von entsprechenden Polyetherdiolen, -triolen und/oder -polyolen mit den Isocyanatgruppen des wenigstens einen Diisocyanates der Hartsegmente unter Bildung von Urethangruppen mit den Hartsegmenten verbunden sind, und/oder
   - Polycarbonateinheiten enthalten, wobei die Polycarbonateinheiten durch Polyaddition von entsprechenden Polycarbonatdiolen mit den Isocyanatgruppen der Hartsegmente unter Bildung von Urethangruppen verbunden sind.

Die Erfindung bezieht sich ferner auf ein Polymer-Formteil, welches wenigstens ein thermoplastisches Polymer mit Formgedächtniseigenschaften der vorgenannten Art oder einen Polymer-Blend mit wenigstens einem solchen Polymer enthält oder gänzlich hieraus gebildet ist, sowie auf ein Verfahren zur Herstellung eines solchen Polymer-Formteils, indem das wenigstens eine thermoplastische Polymer mit Formgedächtniseigenschaften in einer Plastifiziereinheit plastifiziert und in wenigstens einer und/oder im Anschluss an wenigstens eine Austrittsdüse der Plastifiziereinheit zu dem Polymer-Formteil geformt wird.

Bei Polymeren mit Formgedächtniseigenschaften, sogenannten Formgedächtnispolymeren, handelt es sich um Polymere, welche üblicherweise aus wenigstens zwei Polymerkomponenten gebildet sind oder auch aus einer Polymerkomponente mit verschiedenen Segmenten bestehen können. Dabei handelt es sich einerseits um sogenannte Hartsegmente, welche auch als Netzpunkte fungieren. Andererseits handelt es sich um sogenannte Weichsegmente, welche die Netzpunkte miteinander verbinden und auch als Schaltsegmente bezeichnet werden. Die Weich- oder Schaltsegmente sind bei erhöhten Temperaturen erweicht bzw. elastisch (sie liegen in diesem Fall in amorpher Form vor), während sie bei niedrigeren Temperaturen starr sind (sie liegen in diesem Fall in teilkristalliner oder verglaster Form vor). Derartige Polymere lassen sich hinsichtlich ihrer Formgebung programmieren, indem sie auf eine Temperatur erwärmt werden, welche wenigstens der sogenannten Schalttemperatur entspricht, bei welcher der Phasenübergang (Glasübergang bzw. Schmelzübergang) der Weich- bzw. Schaltsegmente stattfindet. Bei einer solchen Temperatur wird das Polymer dann verformt, wonach es auf seine sogenannte Formfixierungstemperatur abgekühlt wird, welche der Kristallisationstemperatur bzw. Glasübergangstemperatur der Weich- oder Schaltsegmente entspricht und im Bereich der Schalttemperatur liegen kann, aber demgegenüber üblicherweise geringer ist. Die Weich- bzw. Schaltsegmente liegen dann wieder in teilkristalliner bzw. verglaster Form vor, so dass die Formgebung erhalten bleibt. Diese Formgebung ist indes insoweit nur temporär, als wenn ein solchermaßen "programmiert" mechanisch verformtes Formgedächtnispolymer auf eine bestimmte Temperatur, nämlich auf seine Schalttemperatur, erwärmt wird, die Weich- bzw. Schaltsegmente wieder in ihre amorphe Form überführt werden, so dass sie der durch die harte Komponente (Netzpunkte) induzierten Rückstellkraft nicht mehr entgegenwirken können und das Formgedächtnispolymer wieder seine ursprünglich Form einnimmt; die mechanische Verformung wird also "rückgängig" gemacht. Ferner besteht bei einigen Formgedächtnispolymeren auch die Möglichkeit einer Programmierung durch Kaltverformung, indem die Polymere bei einer Temperatur unterhalb ihrer Schalttemperatur, z.B. bei Umgebungstemperatur, verformt werden und gegebenenfalls, sofern die Formfixierungstemperatur demgegenüber geringer ist, auf ihre Formfixierungstemperatur abgekühlt werden. Auch in diesem Fall findet insoweit eine nur temporäre Verformung statt, als bei einer abermaligen Erwärmung zumindest auf die Schalttemperatur, um die Weichsegmente (Schaltsegmente) in die amorphe Phase zu überführen und dabei die anlässlich der Kaltverformung induzierten mechanischen Spannungen zu relaxieren, eine Rückverformung stattfindet.

Neben einem solchen Formgedächtnis können thermoresponsive Polymere auch ein Temperaturgedächtnis aufweisen. Hierunter wird verstanden, dass bei einem Auslösen des Formgedächtniseffektes die Formrückstellung etwa bei derjenigen Temperatur einsetzt, bei welcher zuvor die mechanische Verformung in das Material eingebracht worden ist. Ein derartiges Materialverhalten weisen beispielsweise Polymere mit semikristallinen Netzwerkstrukturen auf, wie thermoplastische Polyurethanelastomere (N. Fritzsche, T. Pretsch in Macromolecules 47, 2014, 5952-5959; N. Mirtschin, T. Pretsch in RSC Advances 5, 2015, 46307-46315).

Ein Anwendungsgebiet für derartige Polymere mit Formgedächtniseigenschaften und/oder mit thermoresponsiven Eigenschaften besteht beispielsweise in verschiedenen medizinischen Anwendungen einschließlich Bandagen, Kompressen, Einlegesohlen und dergleichen, aber auch in Gebrauchsgegenständen, wie Geschirr, Spielzeug, Schnuller, Textilien, Matratzen, Schläuchen, Spindeln, Informationsträgern mit fälschungssicheren Kennzeichnungen (vgl. z.B. die DE 10 2015 014 291 B4) und dergleichen.

Ein Nachteil der meisten gegenwärtig bekannten thermoplastischen Formgedächtnispolymeren auf Polyurethan- oder auch auf Polyharnstoffbasis besteht darin, dass sie mit Schalttemperaturen von oberhalb etwa 50°C nur sehr begrenzt verfügbar sind, wobei auch ihre Formfixierungstemperatur üblicherweise demgegenüber geringer ist. Dies setzt den potenziellen Anwendungen von Formgedächtnispolymeren Grenzen, welche ihren Einsatz und insbesondere das Schalten bei demgegenüber höheren Umgebungs- oder Prozesstemperaturen stark limitiert. So sind beispielsweise Polycaprolacton-basierte thermoplastische Polyurethane mit einer Schmelzübergangstemperatur der Weichsegmente von bis zu etwa 55°C bekannt (B. Bogdanov, V. Toncheva, E. Schacht, L. Finelli, B. Sarti, M. Scandola: "Physical properties of poly(ester-urethane) prepared from different molar mass polycaprolactone-diols", Polymer 40, 1999, 3171-3182; J. Kloss, M. Munaro, G.P. De Souza, J.V. Gulmine, S.H. Wang, S. Zawadzki, L. Akcelrud: "Poly(ester urethane)s with polycaprolactone soft segments: a morphological study", J. Polym. Sci. Part A: Polym. Chem. 40, 2002, 4117-4130), welche einen der wenigen Vertreter für thermoplastische Polyurethane mit Formgedächtniseigenschaften mit einer gegenüber Raumtemperatur deutlich erhöhten Schalttemperatur darstellen. Greift man bei dem Polycaprolacton-Diol auf eine für die Synthese von thermoplastischen Polyurethanen eher ungewöhnlich hohe Molmasse, welche zu Kopplungsproblemen und unsauberer Reaktion führen kann, und einen geringen Hartsegmentanteil zurück, so lässt sich der Schmelzübergangspeak im DSC-Thermogramm (dynamische Differenzkalorimetrie; differential scanning calorimetry, DSC) mit 62°C nahe an jenen des Ausgangs-Diols bringen (MW = 7000 g/mol und HSC = 18,7% in F. Li, L. Qi, J. Yang, M. Xu, X. Luo und D. Ma, J. Appl. Polym. Sci. 75, 2000, 68). Für das reine Polycaprolacton mit einem Molekulargewicht von 2000 g/mol treten beim Erwärmen im DSC-Thermogramm während des Schmelzübergangs Signale mit jeweiligen Peaks bei 56°C sowie bei 63°C auf. Im darauffolgenden Abkühlen dagegen findet die Kristallisation des Polycaprolactons jedoch bei sehr geringen Temperaturen unterhalb der Raumtemperatur statt, nämlich im Peak bei 17°C (J. Kloss, M. Munaro, G.P. De Souza, J.V. Gulmine, S.H. Wang, S. Zawadzki, L. Akcelrud, J. Polym. Sci. Part A: Polym. Chem. 40, 2002, 4117-4130).

Darüber hinaus sind Vertreter von Formgedächtnispolymeren in Form von Polyether-Polyurethanen auf der Basis von Polytetramethylenglycol (PTMG) bekannt, welche einen Schmelzpeak im DSC-Thermogramm bei ungefähr 73°C und einen Kristallisationspeak bei ca. 28°C zeigen (J.D. Merline, C.P. Nair, C. Gouri, G.G. Bandyopadhyay, K.N. Ninan, J. Appl. Polym. Sci. 107, 2008, 4082-4092). Weitere Vertreter von Formgedächtnispolymeren mit ähnlich hohen Schalt- und Formfixierungstemperaturen sind nur noch in der Klasse der vornehmlich amorphen Materialien zu finden. Allerdings geht dort jede Erhöhung der Schalttemperatur stets mit einem höheren Grad an Quervernetzung im Polymer einher, was zu einer schlechterer thermischer Verarbeitbarkeit bis hin zu einem duroplastähnlichen Materialverhalten führt.

Die DE 10 2018 007 028 A1 beschreibt ein thermoplastisches Polyester-Polyurethan mit Formgedächtniseigenschaften, welches einerseits
- Hartsegmente, welche Polyurethaneinheiten enthalten, welche durch Polyaddition der Isocyanatgruppen eines Diisocyanates mit den Hydroxygruppen eines als Kettenverlängerer dienenden ersten Diols unter Bildung von Urethangruppen erhalten worden sind, und andererseits
- kristallisierbare Weichsegmente, welche Polyestereinheiten enthalten, wobei die Polyestereinheiten durch Polyaddition von entsprechenden Polyesterdiolen mit den Isocyanatgruppen des Diisocyanates der Hartsegmente unter Bildung von Urethangruppen mit den Hartsegmenten verbunden sind, und wobei die Polyesterdiole durch Polykondensation der Hydroxygruppen eines zweiten Diols mit einer Dicarbonsäure oder mit deren Derivaten unter Bildung von Estergruppen erhalten worden sind,
   enthält. Die Polyesterdiole der Polyestereinheiten der Weichsegmente weisen eine mittlere Molmasse zwischen etwa 1500 g/mol und 10000 g/mol auf, wobei die der Schmelztemperatur der Weichsegmente entsprechende Schalttemperatur des bekannten thermoplastischen Polyester-Polyurethans mit Formgedächtniseigenschaften wenigstens 50°C und die der Kristallisationstemperatur der Weichsegmente entsprechende Formfixierungstemperatur wenigstens 20°C beträgt. Das bekannte Formgedächtnispolymer in Form eines Polyester-Polyurethans besitzt somit eine vergleichsweise hohe Schalttemperatur, was ihm eine Reihe von vormals nicht erschlossenen Anwendungen eröffnet. Allerdings weist das Polyester-Polyurethan mit Formgedächtniseigenschaften aufgrund seines hohen Anteils an Polyestereinheiten eine gewisse Hydrolyseempfindlichkeit auf, was ihm einen Einsatz z.B. unter Umgebungsbedingungen mit Exposition zu (Luft)feuchtigkeit erschwert. Darüber hinaus besitzen Polyester-Polyurethane mit einem sehr hohen Anteil an Polyestereinheiten eine z.B. im Vergleich mit Polyether-Polyurethanen geringere Abriebfestigkeit und neigen zu einem höheren Maß an dynamischer Wärmeentwicklung bei dauerhafter mechanischer Beanspruchung. Was die Schaltfaktoren beim Auslösen des Formgedächtniseffektes von bekannten Formgedächtnispolymeren in Form vom Polyester-Polyurethanen mit (sehr) hohem Anteil an Polyestereinheiten in den Weichsegmenten betrifft, so sind diese im Allgemeinen geringer ausgeprägt als z.B. bei Polyether-Polyurethanen.

Während thermoplastische Polymere mit Formgedächtniseigenschaften weitestgehend mittels üblicher thermoplastischer Verarbeitungsverfahren, wie Extrudieren, Spritzgießen, Heißpressen etc., zu Polymer-Formteilen verarbeitet werden können, wobei sie insbesondere in einer Plastifiziereinheit nach Art eines Extruders plastifiziert und mittels einer Austrittsdüse oder eines Düsenaggregates aus der Plastifiziereinheit ausgebracht werden können, lassen sich einige thermoplastische Polymere mit Formgedächtniseigenschaften auch mittels des Schmelzschichtverfahrens verarbeiten, wie es insbesondere in 3D-Druckern zur Anwendung gelangt. Dieses auch als "fused deposition modeling" (FDM) oder "fused filament fabrication" (FFF) bezeichnete Schmelzschichtverfahren stellt ein Fertigungsverfahren dar, bei welchem ein oder mehrere Filament(e) aus dem thermoplastischen Polymer oder aus einem Polymer-Blend aus thermoplastischen Polymeren in einer Plastifiziereinheit des 3D-Druckers plastifiziert und mittels einer üblicherweise im Druckkopf des 3D-Druckers vorgesehenen Austrittsdüse schichtweise abgeschieden wird bzw. werden, um das letztlich aus einer Vielzahl an solchen Schichten oder "Tropfen" gebildete Polymer-Formteil zu erzeugen. Dies ermöglicht einerseits eine auch zum Prototyping oder für Kleinserien geeignete, schichtweise Herstellung von relativ komplexen und beispielsweise durch herkömmliche thermoplastische Verarbeitungsverfahren, wie Spritzgießen, Extrudieren etc., nicht oder nur schwer herstellbaren Formteilen, wobei das Schmelzschichtverfahren andererseits zunehmend auch für die Serienfertigung von Polymer-Formteilen mit relativ komplexer Geometrie und/oder Oberflächenstrukturen eingesetzt wird. Bei dem Schmelzschichtverfahren mittels auch als "additive manufacturing" bezeichneten 3D-Druckens wird üblicherweise ein dreidimensionales Modell des zu erzeugenden Formteils digital erstellt, was insbesondere mittels der bekannten Methoden des Computer Aided Designs (CAD) geschehen kann. Darüber hinaus wird mittels einer geeigneten Software, wie beispielsweise eines sogenannten Slicer-Programms (z.B. *Cura*^{™} oder dergleichen), das dreidimensionale Modell des zu erzeugenden Polymer-Formteils in eine Mehrzahl an dünnen Schichten zerlegt, woraufhin das plastifizierte Polymer mittels der Austrittsdüse des entsprechend bewegten Druckkopfes schichtweise abgeschieden wird, um das Polymer-Formteil Schicht für Schicht aufzubauen. Unmittelbar nach dem Ausbringen des mehr oder minder strang- oder tropfenförmig aus der Austrittsdüse des Druckkopfes ausgetragenen Polymerplastifikates beginnt der Aushärtungsprozess - oder genauer: der Erstarrungsprozess -, wobei das abgeschiedene Plastifikat beispielsweise bei Umgebungstemperatur oder auch unter aktiver Abkühlung erstarrt. Ein Verfahren zur Herstellung von thermoplastischen Polymer-Formteilen mit Formgedächtniseigenschaften im Schmelzschichtverfahren mittels 3D-Druckern ist beispielsweise aus der DE 10 2018 003 273 A1 bekannt.

Der Erfindung liegt die Aufgabe zugrunde, ein verhältnismäßig einfach und kostengünstig herstellbares thermoplastisches Polymer mit Formgedächtniseigenschaften mit Hartsegmenten auf Polyurethan- und/oder Polyharnstoffbasis der eingangs genannten Art vorzuschlagen, welches unter zumindest weitestgehender Vermeidung der vorgenannten Nachteile sowie unter Gewährleistung einer hohen Formrückstellbarkeit eine gegenüber dem Stand der Technik höhere Schalttemperatur aufweist, um ihm ein breiteres Anwendungsgebiet zu erschließen. Sie ist ferner auf ein Polymer-Formteil gerichtet, welches ein solches thermoplastisches Polymer mit Formgedächtniseigenschaften enthält oder im Wesentlichen gänzlich hieraus gebildet ist, sowie auf ein Verfahren zur Herstellung eines solchen Polymer-Formteils, indem das wenigstens eine thermoplastische Polymer mit Formgedächtniseigenschaften in einer Plastifiziereinheit plastifiziert und in wenigstens einer und/oder im Anschluss an wenigstens eine Austrittsdüse der Plastifiziereinheit zu dem Polymer-Formteil geformt wird.

Der erste Teil dieser Aufgabe wird erfindungsgemäß bei einem thermoplastisches Polymer mit Formgedächtniseigenschaften der eingangs genannten Art dadurch gelöst, dass der Anteil an Hartsegmenten des thermoplastischen Polymers mit Formgedächtniseigenschaften wenigstens 50 Mass.-% beträgt, dass wenigstens ein als Kettenverlängerer dienendes
- Di-, Tri- und/oder Polyol und/oder
- Di-, Tri- und/oder Polyamin
der Hartsegmente von einer cyclischen, heterocyclischen und/oder aromatischen Verbindung gebildet ist, und dass die Schalttemperatur des thermoplastischen Polymers mit Formgedächtniseigenschaften wenigstens 90°C beträgt.

Zur Lösung dieser Aufgabe sieht die Erfindung ferner ein Polymer-Formteil vor, welches wenigstens ein thermoplastisches Polymer mit Formgedächtniseigenschaften der vorgenannten Art oder einen Polymer-Blend mit wenigstens einem solchen Polymer enthält oder im Wesentlichen gänzlich hieraus gebildet ist, wobei die Schalttemperatur des wenigstens einen thermoplastischen Polymers mit Formgedächtniseigenschaften wenigstens 90°C beträgt.

In verfahrenstechnischer Hinsicht sieht die Erfindung zur Lösung dieser Aufgabe bei einem Verfahren zur Herstellung eines solchen Polymer-Formteils schließlich vor, dass das wenigstens eine thermoplastische Polymer mit Formgedächtniseigenschaften sowohl in der Plastifiziereinheit als auch in der wenigstens einen Austrittsdüse auf eine maximale Temperatur unterhalb der oberen Grenztemperatur des Schmelzübergangstemperaturbereiches seiner Hartsegmente erwärmt wird, so dass die Hartsegmente nicht vollständig aufgeschmolzen werden, wonach das wenigstens eine plastifizierte thermoplastische Polymer mit Formgedächtniseigenschaften aus der wenigstens einen Austrittsdüse der Plastifiziereinheit ausgebracht, zu dem Polymer-Formteil geformt und auf eine Temperatur unterhalb der Schalttemperatur abgekühlt wird, um das wenigstens eine thermoplastische Polymer mit Formgedächtniseigenschaften gemeinsam mit der Erzeugung des Polymer-Formteils in einem temporären Formzustand zu programmieren.

Das erfindungsgemäße thermoplastische Polymer mit Formgedächtniseigenschaften sowie auch mit thermoresponsiven Eigenschaften enthält folglich einerseits Hartsegmente auf Polyurethanbasis und/oder auf Polyharnstoffbasis. Im erstgenannten Fall enthalten die Hartsegmente Polyurethaneinheiten enthalten, welche durch Polyaddition der Isocyanatgruppen (-N=C=O-Gruppen) wenigstens eines Diisocyanates mit den Hydroxygruppen (-OH-Gruppen) wenigstens eines als Kettenverlängerer dienenden Di-, Tri- und/oder Polyols unter Bildung von Urethangruppen (-NH-CO-O-) erhalten worden sind:

R-N=C=O + HO-R' ---> R-NH-CO-O-R'

Im letztgenannten Fall enthalten die Hartsegmente Polyharnstoffeinheiten, welche durch Polyaddition der Isocyanatgruppen wenigstens eines Diisocyanates (-N=C=O-Gruppen) mit den Aminogruppen (-NH₂-Gruppen) wenigstens eines als Kettenverlängerer dienenden Di-, Tri- und/oder Polyamins unter Bildung von Harnstoffderivatgruppen (-NH-CO-NH-) erhalten worden sind:

R-N=C=O + H₂N-R' ---> R-NH-CO-NH-R'

Das erfindungsgemäße thermoplastische Polymer mit Formgedächtniseigenschaften enthält ferner Weich- bzw. Schaltsegmente auf Polyether- und/oder Polycarbonatbasis. Im erstgenannten Fall enthalten die Weichsegmente Polyethereinheiten, wobei die Polyethereinheiten durch Polyaddition von entsprechenden Polyetherdiolen, -triolen und/oder -polyolen mit den Isocyanatgruppen des wenigstens einen Diisocyanates der Hartsegmente unter Bildung von Urethangruppen mit den Hartsegmenten verbunden sind. Im letztgenannten Fall enthalten die Weichsegmente Polycarbonateinheiten, wobei die Polycarbonateinheiten durch Polyaddition von entsprechenden Polycarbonatdiolen mit den Isocyanatgruppen der Hartsegmente unter Bildung von Urethangruppen verbunden sind.

Darüber hinaus ist es selbstverständlich auch denkbar, dass das erfindungsgemäße thermoplastische Polymer mit Formgedächtniseigenschaften zusätzliche Weich- bzw. Schaltsegmente enthält, wie beispielsweise als solche aus der eingangs erwähnten DE 10 2018 007 028 A1 bekannte Polyestereinheiten, welche durch Polyaddition von entsprechenden Polyesterdiolen, -triolen und/oder -polyolen mit den Isocyanatgruppen des wenigstens einen Diisocyanates der Hartsegmente unter Bildung von Urethangruppen mit den Hartsegmenten verbunden sind. Solche Polyesterdiole können beispielsweise durch Reaktion der Hydroxygruppen eines Diols mit einer Dicarbonsäure oder mit deren Derivaten, wie z.B. der entsprechenden Disäurehalogenide, Diester, cyclischen Anhydride oder dergleichen, unter Bildung von Estergruppen (-CO-O-) erhalten werden, wobei Beispiele solcher Polyestereinheiten Polyalkylenterephthalateinheiten, insbesondere Polyethylen- (PET), Polypropylen- (PPT) und/oder Polybutylenterephthalateinheiten (PBT), und/oder Polyalkylenfuranoateinheiten, insbesondere Polyethylenfuranoateinheiten (PEF), umfassen.

Überraschenderweise wurde gefunden, dass einem solchen thermoplastischen Polymer dadurch sehr hohe Schalttemperaturen von wenigstens und insbesondere oberhalb etwa 90°C, insbesondere bis zu etwa 150°C, verliehen werden können, wenn das thermoplastische Polymer mit Formgedächtniseigenschaften einen hohen Anteil an Hartsegmenten von wenigstens etwa 50 Mass.-%, bezogen auf die Masse des gesamten Moleküls, beträgt und wenigstens ein als Kettenverlängerer dienendes Di-, Tri- und/oder Polyol und/oder Di-, Tri- und/oder Polyamin der Hartsegmente von einer cyclischen, heterocyclischen und/oder aromatischen Verbindung gebildet ist. Während hierbei üblicherweise Diole bzw. Diamine eingesetzt werden können, können zusätzlich oder alternativ auch Alkohole bzw. Amine mit mehr als zwei Hydroxy- bzw. Aminogruppen eingesetzt werden, wobei geringfügige Verzweigungen, der Hartsegmente, welche z.B. durch den Anteil der mehrfunktionalen Edukte gesteuert werden können, die thermoplastischen Eigenschaften des Polymers nicht beeinträchtigen. Darüber weist das erfindungsgemäße Polymer mit Formgedächtniseigenschaften eine hohe Temperaturstabilität von deutlich oberhalb 200°C auf und entfaltet nach seiner üblichen Programmierung, indem es auf seine Schalttemperatur erwärmt, mechanisch in eine temporäre Form verformt und unter Aufrechterhaltung der temporären Form zumindest auf seine Formfixierungstemperatur abgekühlt wird, hohe Rückstellkräfte, wenn das Polymer durch Auslösen des Formgedächtniseffektes wieder in seine ursprüngliche oder permanente Form zurückgestellt wird, indem das Polymer auf seine Schalttemperatur erwärmt wird.

Dem erfindungsgemäßen thermoplastischen Formgedächtnispolymer werden auf diese Weise neue technische Anwendungen erschlossen, wie beispielsweise auf dem Gebiet des Brandschutzes, z.B. für thermische Stellglieder für Rauchklappen, Brandschutztüren, Entriegelungsmechanismen, etc.), auf dem Gebiet der Luft- und Raumfahrt oder auch in der Fahrzeugtechnik einschließlich der Automotive-Bereiche. Hierbei ist eine Verwendung des erfindungsgemäßen thermoplastischen Formgedächtnispolymers in thermischen Stellgliedern z.B. ebenso möglich wie die Anwendung in thermoresponsiven Entfaltungs- und Klappmechanismen. Darüber hinaus stellen ultraharte Polymer-Formteile, wie sie aus dem erfindungsgemäßen Formgedächtnispolymer gefertigt werden können, einen besonderen technischen Nutzen in der Medizintechnik, z.B. als Implantat- oder Knochenersatzmaterialien, in Aussicht. Die Verarbeitung des thermoplastischen Polymers mit Formgedächtniseigenschaften, welches z.B. als Granulat oder in Pulverform zur Anwendung kommen kann, zu den gewünschten Polymer-Formteilen kann z.B. mittels bekannter thermoplastischer Verarbeitungsverfahren, wie Spritzgießen, Extrudieren, Heißpressen, Sintern oder dergleichen, erfolgen.

Darüber hinaus können dem erfindungsgemäßen thermoplastischen Formgedächtnispolymer selbstverständlich beliebige bekannte Additive zugesetzt sein, wie Gleitmittel, Weichmacher, Antioxidantien, UV-Stabilisatoren, Verstärkungsstoffe, z.B. in Faserform, Flammschutzmittel, Antistatika, Hydrolysestabilisatoren, Schlagzähmodifikatoren, Biostatika etc., oder auch elektromagnetische Strahlung, Wärmestrahlung etc. absorbierende Füllstoffe, thermisch und/oder elektrisch leitfähige Füllstoffe, beispielsweise in Form von Metall- oder Kohlenstoffpartikeln verschiedener Kohlenstoffmodifikationen, um z.B. das Schaltverhalten des Formgedächtnispolymers durch äußere Einwirkungen, wie elektromagnetische Strahlung, Wärme etc., gezielt zu beeinflussen.

Um für eine sehr hohe Schalttemperatur bei einer zugleich sehr hohen thermischen Beständigkeit zu sorgen, kann in vorteilhafter Ausgestaltung vorgesehen sein, dass das erfindungsgemäße thermoplastische Polymer mit Formgedächtniseigenschaften einen Anteil an Hartsegmenten von wenigstens etwa 60 Mass.-%, insbesondere von wenigstens etwa 70 Mass.-%, vorzugsweise wenigstens etwa 80 Mass.-%, höchst vorzugsweise von wenigstens etwa Mass.-85%, aufweist. Dabei sollte der Anteil an Hartsegmenten andererseits vorzugsweise höchstens etwa 98,5 Mass.-%, insbesondere höchstens etwa 97,5 Mass.-%, vorzugsweise höchstens etwa 96,5 Mass.-%, betragen, damit das erfindungsgemäße thermoplastische Polymer über ausgeprägte Formgedächtniseigenschaften verfügt.

Was die erfindungsgemäßen Kettenverlängerer der Hartsegmente in Form von cyclischen, heterocyclischen und/oder aromatischen Verbindungen betrifft, von welchen vermutet wird, dass sie aufgrund von sterischen Effekten in Verbindung mit einem hohen Anteil an Hartsegmenten im Molekül zu den hohen Schalttemperaturen zu führen vermögen, so kann im Falle des wenigstens einen, als Kettenverlängerer dienenden Di-, Tri- und/oder Polyols der Hartsegmente in vorteilhafter Ausgestaltung vorgesehen sein, dass er aus der Gruppe - der Dianhydrohexitole, insbesondere aus der Gruppe Isosorbid (1,4:3,6-Dianhydro-D-sorbitol), Isomannid (1,4:3,6-Dianhydro-D-mannitol) und Isoidid (1,4:3,6-dianhydro-L-iditol),
- der Dihydroxybenzole, wie 1,2-Dihydroxybenzol (Brenzcatechin, 1,3-Dihydroxybenzol (Resorcin) und 1,4-Dihydroxybenzol (Hydrochinon),
- der Trihydroxybenzole, wie 1,3,5-Trihydroxybenzol (Phloroglucin), 1,2,4-Trihydroxybenzol (Hydroxyhydrochinon) und 1,2,3-Trihydrobenzol (Pyrogallol),
- der aliphatischen cyclischen Diole, insbesondere mit wenigstens einem C₅- und/oder C₆-Ring, vorzugsweise aus der Gruppe cis-1,2-Cyclohexandiol, trans-1,2-Cyclohexandiol, cis-1,3-Cyclohexandiol, trans-1,3-Cyclohexandiol, cis-1,4-Cyclohexandiol, trans-1,4-Cyclohexandiol, cis-1,2-Cyclopentandiol, trans-1,2-Cyclopentandiol, cis-1,3-Cyclopentandiol, trans-1,3-Cyclopentandiol und 1,3-Cyclo-pent-4-endiol,
- der Tetrahydrofuran-basierten heterocyclischen Diole, insbesondere Tetrahydrofuran-2,5-dimethanol und Tetrahydrofuran-2,5-diethanol,
- der Di- und Trihydroxybenzoesäuren, insbesondere 3,4,5-Trihydroxybenzoesäure (Gallussäure),
- der aromatischen Di-, Tri- und Polyole mit wenigstens 2 Benzolringen, insbesondere 3,3',4',5,7-Pentahydroxyflavon (Quercetin),
- der Polyphenole mit wenigstens zwei Hydroxygruppen, insbesondere trans-3,5,4'-Trihydroxystilben (Resveratrol),
- der Catechine mit wenigstens zwei Hydroxygruppen, und
- der alkylamin- oder alkanolaminsubstituierten Dihydroxybenzole, insbesondere aus der Gruppe 4-(2-Aminoethyl)-benzol-1,2-diol (Dopamin) und (R)-3,4-Dihydroxyphenyl-ethanolamin (Noradrenalin),
   einschließlich Mischungen hiervon gewählt ist.

Im Falle des wenigstens einen, als Kettenverlängerer dienenden Di-, Tri- und/oder Polyamin der Hartsegmente kann in vorteilhafter Ausgestaltung vorgesehen sein, dass er aus der Gruppe
- der Diaminobenzole, wie 1,2-Diaminobenzol (o-Phenylendiamin), 1,3-Diaminobenzol (m-Phenylendiamin) und 1,4-Diaminobenzol (m-Phenylendiamin),
- der Triaminobenzole, wie 1,3,5-Triaminobenzol, 1,2,4-Triaminobenzol und 1,2,3-Triaminobenzol,
- der aliphatischen cyclischen Diamine, insbesondere mit wenigstens einem C₅- und/oder C₆-Ring, vorzugsweise aus der Gruppe 1,3-Diaminocyclohexan, 1,4-Diaminocyclohexan, 2,4-Diaminocyclohexan, 2,6-Diamino-1-methyl-cyclohexan, 1,3-Diaminomethylcyclohexan, 3-Aminomethyl-3,5,5-trimethyl-cyclohexylamin, 4,4'-Diaminodicyclohexylmethan, 3,3"-Dimethyl-4,4'-diaminodicyclohexylmethan und 3-Aminomethyl-3,5,5-trimethylcyclohexylamin (Isophorondiamin),
- der Tetrahydrofuran-basierten heterocyclischen Diamine, insbesondere 2,5-Furandimethanamin (2,5-Bis(Aminomethyl)-furan), 2,5-Furandiethanamin (2,5-Bis(aminoethyl)furan) und [2-Amino-1-(furan-2-yl)ethyl]dimethylamin, und
- der Stickstoff-basierten heterocyclischen Diaminverbindungen, insbesondere aus der Gruppe Porphyrin (Porphin) und 7,8-Dihydroporphyrin (Chlorin),
einschließlich deren Mischungen gewählt ist.

Darüber hinaus kann es sich aus entsprechenden Gründen als vorteilhaft erweisen, wenn auch das Diisocyanat der Hartsegmente von einer cyclischen, heterocyclischen und/oder aromatischen Verbindung gebildet ist. Beispiele besonders geeigneter Diisocyanate der Hartsegmente umfassen Methylendiphenyldiisocyanate (MDI), insbesondere aus der Gruppe Diphenylmethan-2,2'-diisocyanat (2,2'-MDI), Diphenylmethan-2,4'-diisocyanat (2,4'-MDI), Diphenylmethan-4,4'-diisocyanat (4,4'-MDI) einschließlich deren Isomeren und Isomerengemische, Isophorondiisocyanat (IPDI), 4,4'-Diisocyanatodicyclohexylmethan (H₁₂MDI), Isomeren oder Isomerengemische der Toluendiisocyanate (TDI) oder Mischungen hiervon.

In Bezug auf die Molmasse der Hartsegmente des erfindungsgemäßen thermoplastischen Polymers mit Formgedächtniseigenschaften kann vorteilhafterweise vorgesehen sein, dass die Hartsegmente eine mittlere Molmasse von wenigstens etwa 550 g/mol, insbesondere von wenigstens etwa 750 g/mol, vorzugsweise von wenigstens 1000 g/mol, höchst vorzugsweise von wenigstens etwa 1250 g/mol, aufweisen. Das gesamte Molekül des thermoplastischen Polymers mit Formgedächtniseigenschaften kann vorzugsweise eine mittlere Molmasse
- von wenigstens etwa 650 g/mol, insbesondere von wenigstens etwa 1000 g/mol, vorzugsweise von wenigstens etwa 2000 g/mol, höchst vorzugsweise von wenigstens etwa 3000 g/mol, und/oder
- von höchstens etwa 500000 g/mol, insbesondere von höchstens etwa 350000 g/mol, vorzugsweise von höchstens etwa 300000 g/mol, höchst vorzugsweise von höchstens etwa 200000 g/mol,
aufweisen.

Wie bereits erwähnt, enthalten die Weichsegmente des erfindungsgemäßen thermoplastischen Polymers mit Formgedächtniseigenschaften Polyethereinheiten und/oder Polycarbonateinheiten. In diesem Zusammenhang kann vorteilhafterweise vorgesehen sein, dass die Polyethereinheiten der Weichsegmente
- Polyalkylenglycoleinheiten, insbesondere aus der Gruppe Polyethylen- (PEG), Polypropylen- (PPG) und Polybutylenglycoleinheiten (PBG), und/oder
- Polytetrayhydrofuraneinheiten (PTHF)
enthalten. Die Polycarbonateinheiten der Weichsegmente können beispielsweise Polyalkylencarbonateinheiten, wie Poly(hexamethylencarbonat)einheiten (PHC) oder dergleichen, enthalten, welche durch Polyaddition von entsprechenden Polycarbonatdiolen mit den Isocyanatgruppen der Hartsegmente unter Bildung von Urethangruppen verbunden worden sind.

Die Weichsegmente des thermoplastischen Polymers mit Formgedächtniseigenschaften können hierbei vorzugsweise eine mittlere Molmasse
- von wenigstens etwa 100 g/mol, insbesondere von wenigstens etwa 150 g/mol, vorzugsweise von wenigstens etwa 200 g/mol, z.B. von wenigstens etwa 250 g/mol, und/oder
- von höchstens etwa 10000 g/mol, insbesondere von höchstens etwa 5000 g/mol, vorzugsweise von höchstens etwa 4000 g/mol, z.B. von höchstens etwa 3000 g/mol,
aufweisen.

Wie bereits angedeutet, macht es die Erfindung möglich, dass das thermoplastische Polymer mit Formgedächtniseigenschaften eine Schalttemperatur von deutlich oberhalb etwa 90°C aufweist, wie von wenigstens etwa 100°C, insbesondere von wenigstens etwa 110°C, vorzugsweise von wenigstens 120°C oder von wenigstens etwa 130°C.

Die thermische Beständigkeit des erfindungsgemäßen thermoplastischen Polymers mit Formgedächtniseigenschaften beträgt vorzugsweise wenigstens etwa 200°C, insbesondere wenigstens etwa 220°C, vorzugsweise wenigstens 240°C, oder mehr.

Die Programmierung des erfindungsgemäßen thermoplastischen Polymers mit Formgedächtniseigenschaften in eine temporäre Form kann grundsätzlich in als solcher bekannter Weise geschehen, indem z.B. ein mittels beliebiger bekannter thermoplastischer Verarbeitungsverfahren erzeugtes Polymer-Formteil aus einem solchen Formgedächtnispolymer oder aus einem ein solches enthaltenden Polymer-Blend im Nachgang zu seiner eigentlichen Herstellung thermomechanisch behandelt wird, um das thermoplastische Polymer mit Formgedächtniseigenschaften in eine gewünschte temporäre Form zu überführen, aus welcher es dann wieder in seine ursprüngliche - z.B. permanente - Form zurück überführt werden kann, wenn das Polymer-Formteil auf die Schalttemperatur des wenigstens einen thermoplastischen Polymers mit Formgedächtnis- erwärmt wird. Die thermomechanische Behandlung umfasst hierbei üblicherweise eine Erwärmung des thermoplastischen Polymers mit Formgedächtniseigenschaften zumindest in den Bereich seiner Schalttemperatur, um es sodann in die gewünschte temporäre Form zu verformen, woraufhin es unter Aufrechterhaltung der temporären Form wieder auf eine Temperatur unterhalb seiner Schalttemperatur abgekühlt wird.

Eine solche nachträgliche thermomechanische Behandlung kann jedoch insbesondere im Falle der erfindungsgemäßen thermoplastischen Polymere mit Formgedächtniseigenschaften mit einer hohen Schalttemperatur von wenigstens 90°C sowohl relativ zeit- als auch relativ energie- und somit kostenintensiv sein, weshalb das erfindungsgemäße Verfahren zur Herstellung eines Polymer-Formteils, welches wenigstens ein erfindungsgemäßes thermoplastisches Polymer mit Formgedächtniseigenschaften oder einen Polymer-Blend mit wenigstens einem solchen Polymer enthält oder im Wesentlichen gänzlich hieraus gebildet ist, vorsieht, dass das wenigstens eine thermoplastische Polymer mit Formgedächtniseigenschaften in einer Plastifiziereinheit plastifiziert und in wenigstens einer und/oder im Anschluss an wenigstens eine Austrittsdüse der Plastifiziereinheit zu dem Polymer-Formteil geformt wird, wobei das wenigstens eine thermoplastische Polymer mit Formgedächtniseigenschaften sowohl in der Plastifiziereinheit als auch in der wenigstens einen Austrittsdüse auf eine maximale Temperatur unterhalb der oberen Grenztemperatur des Schmelzübergangstemperaturbereiches seiner Hartsegmente erwärmt wird, so dass die Hartsegmente nicht vollständig aufgeschmolzen werden, wonach das wenigstens eine plastifizierte thermoplastische Polymer mit Formgedächtniseigenschaften aus der wenigstens einen Austrittsdüse der Plastifiziereinheit ausgebracht, zu dem Polymer-Formteil geformt und auf eine Temperatur unterhalb der Schalttemperatur abgekühlt wird, um das wenigstens eine thermoplastische Polymer mit Formgedächtniseigenschaften gemeinsam mit der Erzeugung des Polymer-Formteils in einem temporären Formzustand zu programmieren.

Auf diese Weise kann dem Polymer-Formteil bereits simultan mit seiner Herstellung ein Formgedächtniseffekt aufgeprägt werden - oder genauer: bereits während der Herstellung kann das Polymer-Formteil in einer temporären Form erzeugt werden, von welcher es dann anschließend in eine permanente Form überführt werden kann, sofern es auf die Schalttemperatur des wenigstens einen thermoplastischen Polymers mit Formgedächtniseigenschaften gebracht wird. Die erfindungsgemäß eingesetzten thermoplastischen Polymere mit Formgedächtniseigenschaften werden folglich anlässlich ihrer Plastifizierung nur bis auf eine maximale Temperatur unterhalb der oberen Grenztemperatur des Schmelzübergangstemperaturbereiches ihrer Hartsegmente erwärmt, d.h. auf eine Temperatur, bei welcher zumindest die Hartsegmente nicht vollständig aufgeschmolzen werden. In diesem Zustand werden die plastifizierten thermoplastischen Polymere mit Formgedächtniseigenschaften aus der wenigstens einen Austrittsdüse der Plastifiziereinheit ausgebracht, zu dem Polymer-Formteil geformt und auf eine Temperatur unterhalb der Schalttemperatur bzw. unterhalb des Glasübergangstemperaturbereiches abgekühlt. Hierbei wurde gefunden, dass es dadurch möglich ist, das wenigstens eine thermoplastische Polymer mit Formgedächtniseigenschaften gemeinsam mit der Erzeugung des Polymer-Formteils in einem temporären Formzustand zu programmieren, d.h. es wird während seiner Formgebung in eine temporäre Form gebracht, aus welcher es dann später, wenn das wenigstens eine thermoplastische Polymer mit Formgedächtniseigenschaften zumindest auf oder zweckmäßigerweise bis oberhalb seiner Schalttemperatur, aber unterhalb dem Schmelzübergangstemperaturbereich seiner Hartsegmente, erwärmt wird, in eine permanente Form überführt werden kann. Aufgrund des nicht vollständigen Aufschmelzens zumindest der Hartsegmente werden auch die physikalischen Netzpunkte des thermoplastischen Polymers mit Formgedächtniseigenschaften zumindest nicht vollständig aufgeschmolzen, während durch die thermoplastische Verarbeitung zu dem Polymer-Formteil zugleich Scher- und Schubkräfte in das plastifizierte Polymermaterial eingetragen werden. Nach Austritt aus der Austrittsdüse der Plastifiziereinheit und nach Abkühlen auf eine Temperatur unterhalb der Schalttemperatur, also unterhalb des Glasübergangstemperaturbereiches der Weichsegmente, werden die infolge dieser mechanischen Kräfte in das Polymermaterial eingetragenen Verformungen, wie beispielsweise in Form von Dehnungen, durch die Verglasung der Weichsegmente, bei welchen es sich im Übrigen auch um Mischphasen aus Weich- und Hartsegmenten handeln kann, fixiert und wird auf diese Weise ein, insbesondere thermoresponsiver, Formgedächtniseffekt aufgeprägt. Das abgekühlte Polymer-Formteil verbleibt dann so lange in seiner temporären Form, welche ihm während seiner Herstellung mittels thermoplastischer Verarbeitungsverfahren verliehen worden ist, bis es auf den bzw. auf eine Temperatur oberhalb dem Glasübergangstemperaturbereich bzw. oberhalb der Schalttemperatur, welche in der Regel etwa in dem Glasübergangstemperaturbereich liegen oder demgegenüber etwas höher sein kann - erwärmt wird, woraufhin es ohne Aufbringen von mechanischen Kräften in seine permanente Form überführt wird.

Das erfindungsgemäße Verfahren macht nicht nur eine thermoplastische Verarbeitung der erfindungsgemäßen thermoplastischen Polymere mit Formgedächtniseigenschaften mittels klassischer thermoplastischer Verarbeitungsverfahren, z.B. mittels eines Extruders, möglich, wobei dem erhaltenen Polymer-Formteil zugleich ein Formgedächtniseffekt verliehen werden kann, sondern eignet sich insbesondere zur Anwendung im Schmelzschichtverfahren mittels 3D-Druckern (siehe hierzu auch weiter unten). Ein weiterer Vorteil besteht beispielsweise darin, dass es mit dem erfindungsgemäßen Verfahren in verhältnismäßig einfacher und wirtschaftlicher Weise möglich wird, auch für sehr komplexe dreidimensionale Formänderungen im Anschluss an die Herstellung des Polymer-Formteils durch Überführung desselben aus seiner gemeinsam mit der Herstellung verliehenen temporären Form in die permanente Form zu sorgen, ohne dass hierzu aufwändige Werkzeuge erforderlich sind, wie sie im Falle einer nachträglichen thermomechanischen Behandlung zum Einsatz gelangen, um ein Polymer-Formteil aus Formgedächtnispolymeren aus seiner permanenten Form in eine temporäre Form zu überführen.

Schließlich sei an dieser Stelle darauf hingewiesen, dass das erfindungsgemäße Verfahren beispielsweise auch die Möglichkeit eröffnet, ein erfindungsgemäßes thermoplastisches Polymer mit Formgedächtniseigenschaften mit wenigstens einem weiteren, erfindungsgemäßen oder bereits bekannten thermoplastischen Polymer mit Formgedächtniseigenschaften, welche unterschiedliche Schalt- bzw. Glasübergangstemperaturen ihrer Weichsegmente besitzen können, gemeinsam zu verarbeiten. Auf diese Weise ist es einerseits möglich, die Schalttemperaturen für die Phasenübergänge eines solchermaßen hergestellten Polymer-Formteils gezielt einzustellen, andererseits kann alternativ oder zusätzlich durch eine **Be**einflussung des Wärmetransportes in verschiedenen Bereichen des Polymer-Formteils ein zeitabhängiges Schalten, **d.h. ei**ne zeitabhängige bereichsweise Verformung des Polymer-Formteils aus der herstellungstechnisch bewirkten temporären Form in die permanente Form, ausgelöst werden. Zu diesen Zwecken können z.B. Polymer-Blends bzw. Polymer-Mischungen mit wenigstens einem erfindungsgemäßen thermoplastischen Polymer mit Formgedächtniseigenschaften eingesetzt werden, oder es können insbesondere bei einer Erzeugung von Polymer-Formteilen mittels des Schmelzschichtverfahrens unter Verwendung von 3D-Druckern beispielsweise mehrere Druckfilamente aus unterschiedlichen Polymeren zum Einsatz gelangen (sogenannter "Multimaterialdruck"), wobei es sich zumindest bei einem oder allen dieser Polymere um erfindungsgemäße thermoplastische Polymer mit Formgedächtniseigenschaften handelt.

In vorteilhafter Ausgestaltung des erfindungsgemäßen Verfahrens kann vorgesehen sein, dass das wenigstens eine thermoplastische Polymer mit Formgedächtniseigenschaften sowohl in der Plastifiziereinheit als auch in der wenigstens einen Austrittsdüse auf eine maximale Temperatur erwärmt wird, welche höchstens einem Temperatur-Peak des Schmelzübergangstemperaturbereiches seiner Hartsegmente in einem mittels dynamischer Differenzkalorimetrie (differential scanning calometry, DSC) erhaltenen DSC-Thermogramm bei der Erwärmung entspricht, wobei das wenigstens eine thermoplastische Polymer mit Formgedächtniseigenschaften sowohl in der Plastifiziereinheit als auch in der wenigstens einen Austrittsdüse insbesondere auf eine maximale Temperatur unterhalb der unteren Grenztemperatur des Schmelzübergangstemperaturbereiches seiner Hartsegmente **er**wärmt wird. Werden auf diese Weise die Hartsegmente des thermoplastischen Polymers mit Formgedächtniseigenschaften anlässlich seiner Verarbeitung nur bis maximal auf die untere Grenztemperatur des Schmelzübergangstemperaturbereiches der Hartsegmente oder nur geringfügig oberhalb derselben erwärmt, so werden die Hartsegmente praktisch nicht oder nur geringfügig auf- bzw. angeschmolzen, wodurch sie ihre Netzwerkstruktur beibehalten und es vornehmlich nur zu einer Umorientierung der Netzpunkte ohne Phasenwechsel der Hartsegmente kommt, was wiederum das Einbringen von hohen Eigenspannungen ermöglicht.

Hierbei wurde gefunden, dass die während des Ausbringens des thermoplastischen Polymers mit Formgedächtniseigenschaften aus der Austrittsdüse in das Polymer eingebrachten Spannungen in erheblicher Weise von der eingestellten Geschwindigkeit der Austrittsdüse, wie z.B. an dem Druckkopf eines 3D-Druckers, abhängen, wobei ein um so höheres Maß an Ausrichtung der Polymerstränge dadurch erreicht wird, indem die Austrittsdüse um so schneller bewegt wird. In vorteilhafter Ausgestaltung kann in diesem Zusammenhang vorgesehen sein, dass die wenigstens eine Austrittsdüse der Plastifiziereinheit während des Ausbringens des wenigstens einen plastifizierten thermoplastischen Polymers mit Formgedächtniseigenschaften mit einer Geschwindigkeit
- von wenigstens etwa 1 mm/s, insbesondere von wenigstens etwa 2 mm/s, z.B. von wenigstens etwa 3 mm/s oder von wenigstens etwa 4 mm/s; vorzugsweise von wenigstens 5 mm/s; und/oder
- von höchstens etwa 80 mm/s, z.B. von höchstens etwa 70 mm/s, insbesondere von höchstens etwa 60 mm/s, wie beispielsweise von höchstens etwa 50 mm/s, vorzugsweise von höchstens etwa 40 mm/s,
bewegt wird.

Gemäß einer Weiterbildung des erfindungsgemäßen Verfahrens kann ferner vorgesehen sein, dass das wenigstens eine thermoplastische Polymer mit Formgedächtniseigenschaften während und/oder nach seinem Ausbringen aus der wenigstens einen Austrittsdüse der Plastifiziereinheit auf einer Temperatur im Bereich oder oberhalb der Schalttemperatur gehalten und verformt wird, um es unter Einwirkung von mechanischen Kräften oder Spannungen zusätzlich in einem temporären Formzustand zu programmieren, wonach es auf eine Temperatur unterhalb der Schalttemperatur abgekühlt wird. Eine solche Verformung in einem (noch) vornehmlich amorphen Zustand der Weichsegmente kann beispielsweise mittels geeigneter Formwerkzeuge, mittels geeigneter, als Austrittsdüsen der Plastifiziereinheit eingesetzter Formdüsen, mittels der Austrittsdüse nachgeordneter Kalibriereinheiten, um den Plastifikatstrang zu kalibrieren, oder auf dem, z.B. auf die jeweilige Temperatur temperierten, Drucktisch eines 3D-Druckers erfolgen, wobei - wie bereits erwähnt - der Drucckopf und/oder der Drucktisch während des Ablegens der Plastifikatstränge mit unterschiedlichen Relativgeschwindigkeiten zueinander bewegt werden können, um mechanische Kräfte bzw. Spannungen der jeweils gewünschten Richtung und des jeweils gewünschten Betrags in das Polymermaterial einzubringen und hierdurch das Formrückstellvermögen zu steuern.

Wie bereits erwähnt, lässt sich das programmierte Formrückstellvermögen des wenigstens einen thermoplastischen Polymers mit Formgedächtniseigenschaften durch die Steuerung verschiedener Verfahrensparameter verändern, wobei das programmierte Formrückstellvermögen des wenigstens einen thermoplastischen Polymers mit Formgedächtniseigenschaften vorzugsweise durch Steuerung wenigstens eines Parameters aus der Gruppe
- in der Plastifiziereinheit eingestellte Temperatur,
- Temperatur der wenigstens einen Austrittsdüse der Plastifiziereinheit (wie bereits erwähnt, ergibt sich qualitativ ein um so größeres Formrückstellvermögen des in situ programmierten Polymer-Formteils, je geringer die in der Plastifiziereinheit und/oder in deren Austrittsdüse eingestellte Temperatur ist, d.h. je unvollständiger bzw. praktisch gar nicht die Hartsegmente des thermoplastischen Polymers während seiner Verarbeitung zu dem Polymer-Formteil aufgeschmolzen worden sind bzw. je "unterkühlter" das thermoplastische Polymer mit Formgedächtniseigenschaften verarbeitet worden ist),
- Geschwindigkeit der wenigstens einen Austrittsdüse während des Ausbringens des wenigstens einen thermoplastischen Polymers mit Formgedächtniseigenschaften (wie ebenfalls bereits erwähnt, lassen sich durch die Abscheidegeschwindigkeit insbesondere die in das Polymer eingebrachten Spannungen sowie die Orientierung der Polymerstränge steuern),
- Temperaturgradient während des Abkühlens des wenigstens einen thermoplastischen Polymers mit Formgedächtniseigenschaften (die Ausprägung des Formgedächtniseffektes lässt sich hierbei durch die Abkühlgeschwindigkeit steuern, wobei möglichst hohe Abkühlgeschwindigkeiten mit großem Temperaturgradient und folglich ein schnelles "Einfrieren" der in das Polymer eingebrachten Spannungen qualitativ zu besonders ausgeprägten Rückverformungen führen; der Temperaturgradient kann dabei z.B. mittels externer Kühleinrichtungen und/oder im Falle eines 3D-Druckens durch eine entsprechend geringe Temperatur des Druckbettes eingestellt werden),
- im Innern der Plastifiziereinheit eingestellter Druck (so können mittels eines entsprechendes Druckes mechanische Kräfte unterschiedlichen Betrags und/oder Richtung in das nicht gänzlich aufgeschmolzene Polymermaterial eingetragen werden),
- Art und/oder Menge an dem wenigstens einen thermoplastischen Polymer mit Formgedächtniseigenschaften zugesetzten, Wärmestrahlung absorbierenden und/oder thermisch leitfähigen Additiven (durch den Einsatz solcher Additive, wie beispielsweise in Form von Beschichtungen oder insbesondere in Form von, vorzugsweise partikelförmigen, Füllstoffen, kann die Abkühlung des aus der Austrittsdüse ausgebrachten Polymerstrangs und somit das Ausmaß der hierbei eingebrachten Eigenspannungen ebenfalls gesteuert werden),
eingestellt wird.

Wie ebenfalls bereits angedeutet, sieht eine vorteilhafte Ausgestaltung des erfindungsgemäßen Verfahrens vor, dass das wenigstens eine thermoplastische Polymer mit Formgedächtniseigenschaften in einer Plastifiziereinheit eines 3D-Druckers plastifiziert, mittels wenigstens einer Austrittsdüse in Form eines in Bezug auf einen Drucktisch bzw. auf ein Druckbett gesteuert relativbewegbaren Druckkopfes des 3D-Druckers aus der Plastifiziereinheit ausgebracht und schichtweise unter Bildung des Polymer-Formteils abgeschieden wird, wonach die mittels der Austrittsdüse(n) des Druckkopfes schichtweise ausgebrachten Plastifikatstränge auf eine Temperatur unterhalb der Schalttemperatur bzw. unterhalb des Glasübergangstemperaturbereiches der Weichsegmente abgekühlt werden. Somit ist es zur Herstellung des Polymer-Formteils in seiner temporären Form mittels eines solchen Schmelzschichtverfahrens in einfacher Weise möglich, die Richtung der gewünschten Formrückstellung in die permanente Form des Polymer-Formteils einzustellen, indem die Ablagerichtung der Plastifikatstränge auf dem Drucktisch durch entsprechende Relativbewegung des Druckkopfes in Bezug auf den Drucktisch vorgegeben wird. Gleichfalls ist es auf diese Weise möglich, für eine Formrückstellung ein und desselben Polymer-Formteils in unterschiedliche Richtungen zu sorgen, indem Bereiche des Polymer-Formteils durch unterschiedliche Relativbewegungen des Druckkopfes in Bezug auf den Drucktisch erzeugt werden, d.h. die Orientierung der schichtweise abgeschiedenen Plastifikatstränge, aus welchen das Polymer-Formteil gedruckt wird, kann in verschiedenen Bereichen des Polymer-Formteils unterschiedlich gewählt werden. Wie bereits erwähnt, lassen sich ferner durch unterschiedliche Relativgeschwindigkeiten des Druckkopfes in Bezug auf den Drucktisch bereichsweise verschiedene Rückstellverhalten in ein und demselben Polymer-Formteil realisieren, indem durch die unterschiedlichen Relativgeschwindigkeiten unterschiedliche mechanische Kräfte bzw. Spannungen in die praktisch gar nicht oder zumindest nicht vollständig geschmolzenen Hartsegmente des wenigstens einen Polymers mit Formgedächtniseigenschaften eingebracht werden, welche anlässlich eines späteren Erwärmens zumindest auf die Schalttemperatur relaxiert werden, um die Formrückstellung in die permanente Form auszulösen. Sofern gewünscht, können die Plastifikatstränge des wenigstens einen thermoplastischen Polymers mit Formgedächtniseigenschaften während und/oder nach ihrem Ausbringen aus dem wenigstens einen Druckkopf des 3D-Druckers auch auf einer Temperatur im oder oberhalb dem Glasübergangstemperaturbereich gehalten und (zusätzlich) verformt werden, um sie unter Einwirkung von mechanischen Kräften oder Spannungen zusätzlich in einem temporären Formzustand zu programmieren, indem z.B. die Richtung und/oder der Betrag der Relativgeschwindigkeit des Druckkopfes in Bezug auf den Drucktisch gesteuert wird.

Das fertige Polymer-Formteil kann zu einem praktisch beliebigen Zeitpunkt nach seiner erfindungsgemäßen Herstellung auf eine Temperatur im oder oberhalb der Schalttemperatur bzw. des Glasübergangstemperaturbereiches der Weichsegmente erwärmt werden, um es von seinem programmierten temporären Formzustand in einen permanenten Formzustand zu überführen.

Nachstehend ist die Erfindung anhand von Ausführungsbeispielen unter Bezugnahme auf die Zeichnungen näher erläutert. Dabei zeigen:

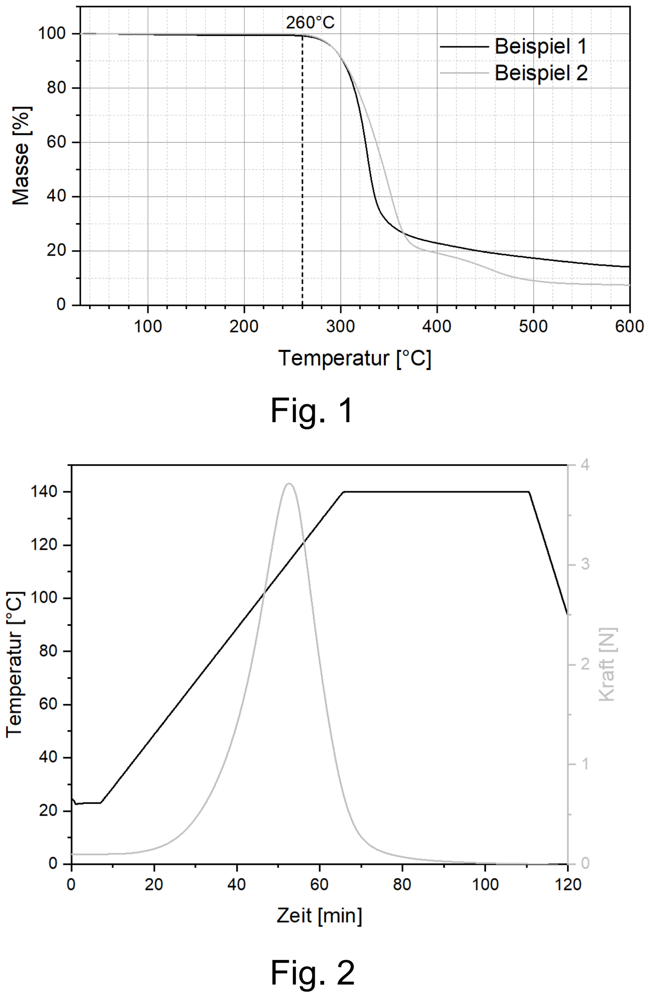

- Fig. 1: eine mittels thermogravimetrischer Analyse ermittelte Messkurve der Masse in Abhängigkeit der der Temperatur je einer Ausführungsform von erfindungsgemäßen thermoplastischen Polymeren mit Formgedächtniseigenschaften gemäß den Ausführungsbeispielen 1 und 2;
- Fig. 2: eine mittels dynamisch-mechanischer Analyse ermittelte Messkurve von Temperatur und Rückstellkraft in Abhängigkeit der Zeit zur Ermittlung der Rückstellkraft beim Schalten der Ausführungsform eines erfindungsgemäßen thermoplastischen Formgedächtnispolymers gemäß dem Ausführungsbeispiel 1;

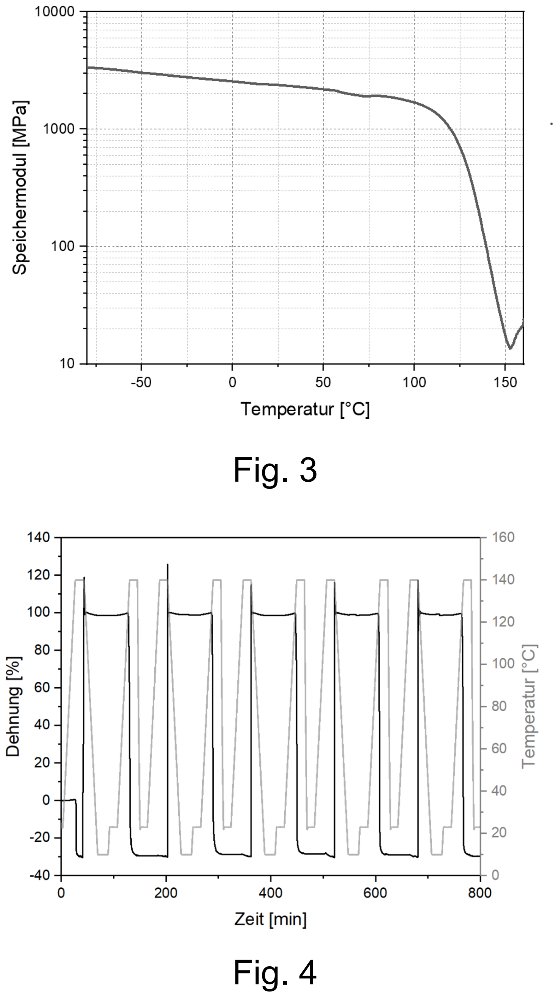

- Fig. 3: eine mittels dynamisch-mechanischer Analyse ermittelte Messkurve des Speichermoduls beim Erwärmen der Ausführungsform eines erfindungsgemäßen thermoplastischen Formgedächtnispolymers gemäß dem Ausführungsbeispiel 1 von -80°C auf 160°C;
- Fig. 4: eine mittels dynamisch-mechanischer Analyse ermittelte Messkurve der Dehnung in Abhängigkeit der Zeit bei verschiedenen Temperaturen zur Charakterisierung des Formgedächtniseffektes der Ausführungsform eines erfindungsgemäßen thermoplastischen Formgedächtnispolymers gemäß dem Ausführungsbeispiel 1;

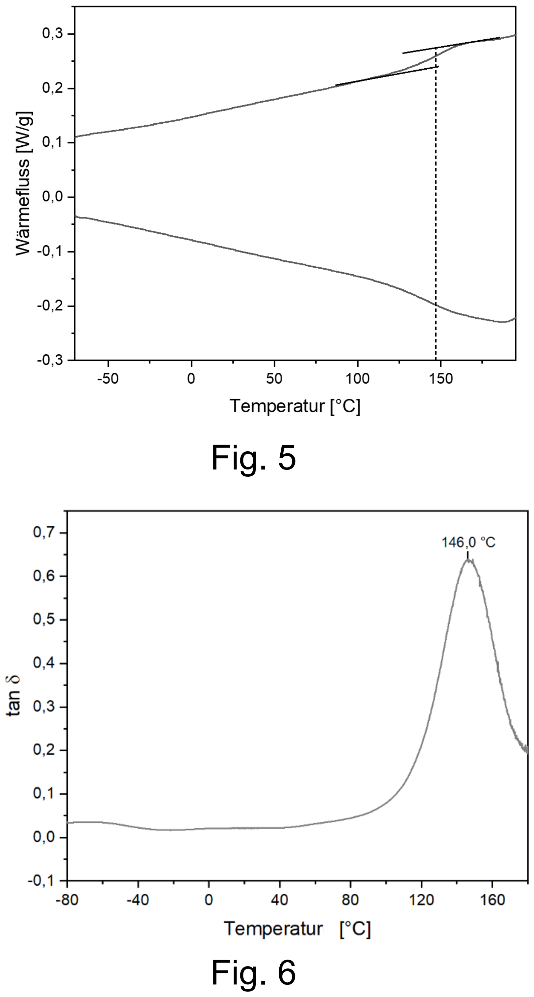

- Fig. 5: ein mittels dynamischer Differenzkalorimetrie (DSC) ermitteltes Schaubild des Wärmeflusses in Abhängigkeit der Temperatur zur Ermittlung der Glasübergangstemperatur der Ausführungsform eines erfindungsgemäßen thermoplastischen Formgedächtnispolymers gemäß dem Ausführungsbeispiel 1;
- Fig. 6: ein mittels dynamisch-mechanischer Analyse ermitteltes Schaubild des Verlustfaktors tan δ, welcher sich aus dem Verhältnis von Verlust- und Speichermodul ergibt und das Dämpfungsverhalten eines Werkstoffs charakterisiert, zur Ermittlung der Glasübergangstemperatur der Ausführungsform eines erfindungsgemäßen thermoplastischen Formgedächtnispolymers gemäß dem Ausführungsbeispiel 1;

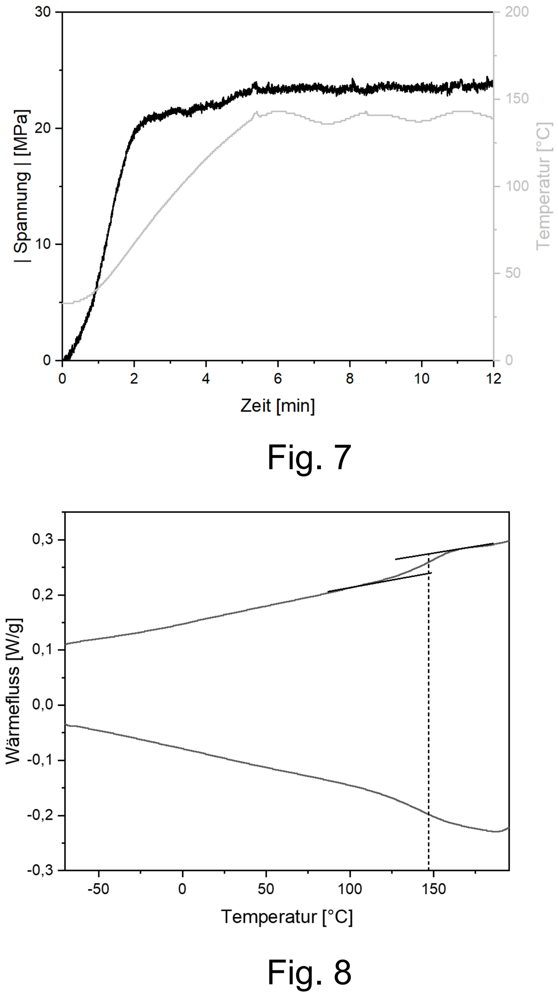

- Fig. 7: ein Schaubild der ermittelten Spannung in Abhängigkeit der Zeit beim Erwärmen von 23°C auf 140°C zur Charakterisierung der Rückstellspannung eines um 100% gedehnten Zugstabes der Ausführungsform eines erfindungsgemäßen thermoplastischen Formgedächtnispolymers gemäß dem Ausführungsbeispiel 2;
- Fig. 8: ein mittels dynamischer Differenzkalorimetrie (DSC) ermitteltes Schaubild des Wärmeflusses in Abhängigkeit der Temperatur zur Ermittlung der Glasübergangstemperatur der Ausführungsform eines erfindungsgemäßen thermoplastischen Formgedächtnispolymers gemäß dem Ausführungsbeispiel 2;

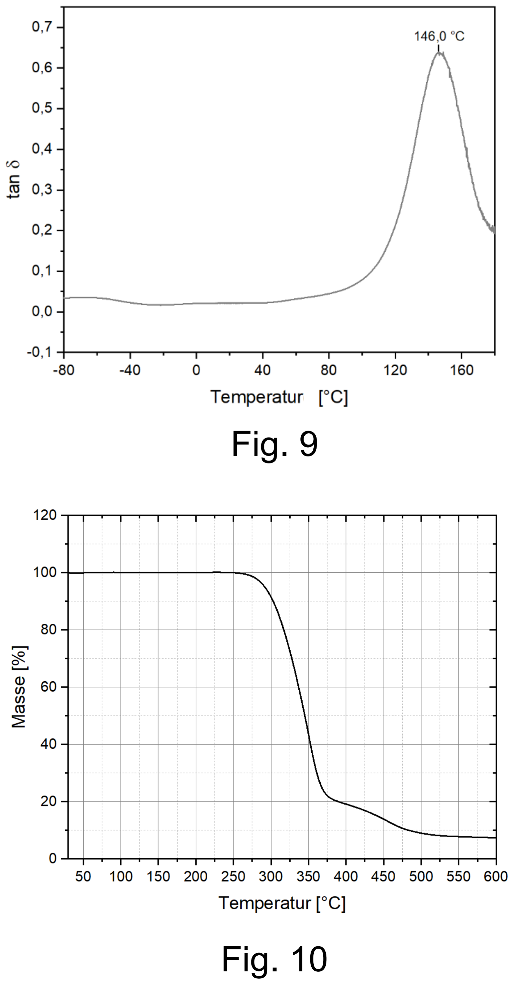

- Fig. 9: ein mittels dynamisch-mechanischer Analyse ermitteltes Schaubild des Verlustfaktors tan δ, welcher sich aus dem Verhältnis von Verlust- und Speichermodul ergibt und das Dämpfungsverhalten eines Werkstoffs charakterisiert, zur Ermittlung der Glasübergangstemperatur der Ausführungsform eines erfindungsgemäßen thermoplastischen Formgedächtnispolymers gemäß dem Ausführungsbeispiel 2;
- Fig. 10: eine mittels thermogravimetrischer Analyse ermittelte Messkurve der Masse in Abhängigkeit der Temperatur einer Ausführungsform eines erfindungsgemäßen thermoplastischen Polymers mit Formgedächtniseigenschaften gemäß dem Ausführungsbeispiel 3;

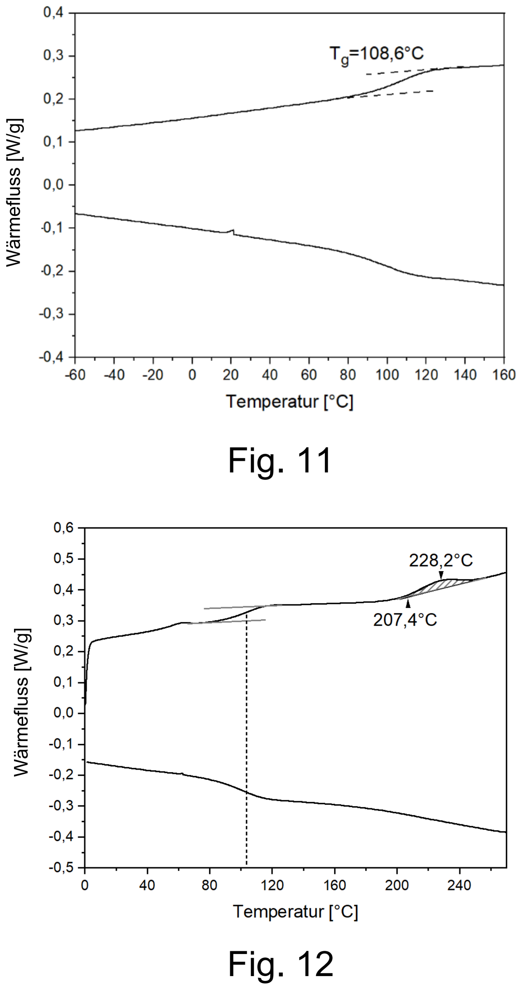

- Fig. 11: ein mittels dynamischer Differenzkalorimetrie (DSC) ermitteltes Schaubild des Wärmeflusses in Abhängigkeit der Temperatur in einem Temperaturbereich von etwa -60°C bis etwa 160°C zur Ermittlung der Glasübergangstemperatur der Ausführungsform eines erfindungsgemäßen thermoplastischen Formgedächtnispolymers gemäß dem Ausführungsbeispiel 3;
- Fig. 12: ein mittels dynamischer Differenzkalorimetrie (DSC) ermitteltes Schaubild des Wärmeflusses in Abhängigkeit der Temperatur in einem Temperaturbereich von etwa 0°C bis etwa 270°C zur Ermittlung des Schmelzübergangstemperaturbereiches der Hartsegmente der Ausführungsform eines erfindungsgemäßen thermoplastischen Formgedächtnispolymers gemäß dem Ausführungsbeispiel 3;

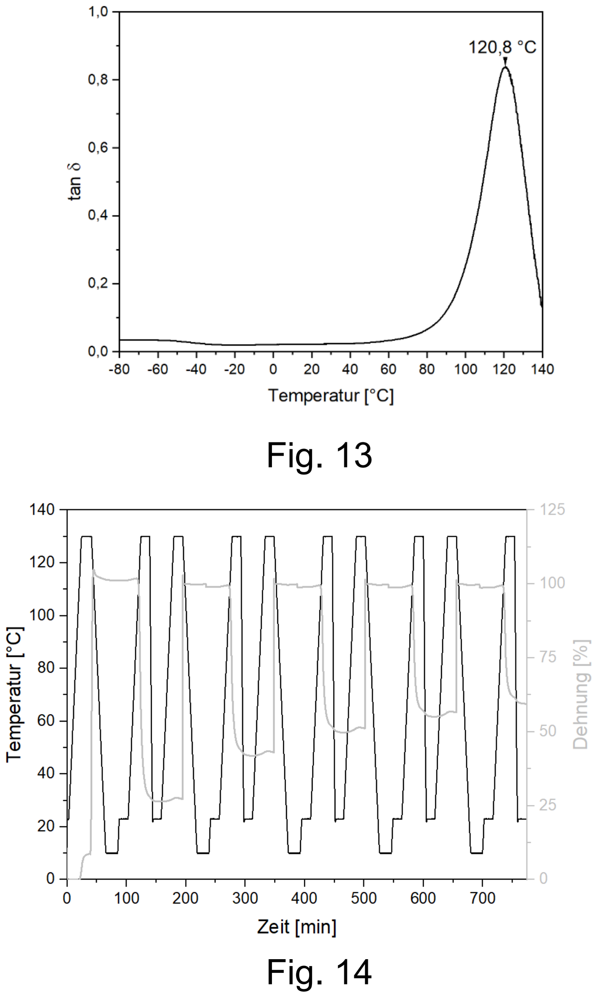

- Fig. 13: ein mittels dynamisch-mechanischer Analyse ermitteltes Schaubild des Verlustfaktors tan δ, welcher sich aus dem Verhältnis von Verlust- und Speichermodul ergibt und das Dämpfungsverhalten eines Werkstoffs charakterisiert, zur Ermittlung der Glasübergangstemperatur der Ausführungsform eines erfindungsgemäßen thermoplastischen Formgedächtnispolymers gemäß dem Ausführungsbeispiel 3;
- Fig. 14: eine mittels dynamisch-mechanischer Analyse **er**mittelte Messkurve der Dehnung in Abhängigkeit der Zeit bei verschiedenen Temperaturen zur Charakterisierung des Formgedächtniseffektes der Ausführungsform eines erfindungsgemäßen thermoplastischen Formgedächtnispolymers gemäß dem Ausführungsbeispiel 3;

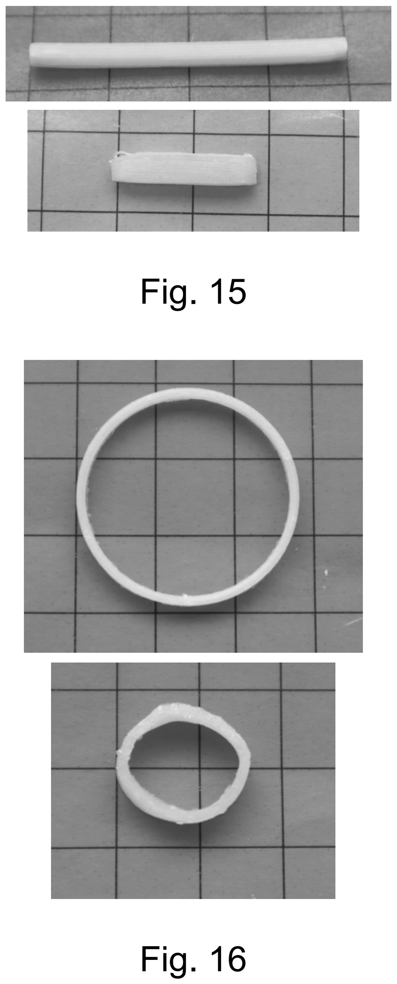

- Fig. 15: je eine fotografische Ansicht eines aus dem erfindungsgemäßen Formgedächtnispolymer gemäß dem Ausführungsbeispiel 3 gedruckten und in situ programmierten Probekörpers in Form eines Stabes nach dem Drucken (oben) sowie nach Auslösen des Formgedächtniseffektes (unten); und
- Fig. 16: je eine fotografische Ansicht eines aus dem erfindungsgemäßen Formgedächtnispolymer gemäß dem Ausführungsbeispiel 3 gedruckten und in situ programmierten Probekörpers in Form eines Rings nach dem Drucken (oben) sowie nach Auslösen des Formgedächtniseffektes (unten).

### Ausführungsbeispiele:

### Beispiel 1:

Herstellung eines thermoplastischen Polyether-Polyurethans mit Formgedächtniseigenschaften und mit thermoresponsiven Eigenschaften mit einer Schalttemperatur im Bereich von 122°C bis 125°C:

| | |
|---|---|
| Hartsegmente: | Polyurethaneinheiten, welche durch Polyaddition eines Diisocyanates in Form von 4,4'-Methylendiphenyldiisocyanat (4,4'-MDI) mit einem als Kettenverlängerer dienenden Diol in Form von Isosorbid (IS, 1,4:3,6-Dianhydro-D-sorbitol) erhalten worden sind; |
| Weichsegmente: | Polyethereinheiten in Form von Polpropylenglycol (PPG) mit einer zahlenmäßig mittleren Molmasse von etwa 430 g/mol. |

Das thermoplastische Polyether-Polyurethan mit Formgedächtniseigenschaften wird nach dem Prepolymerverfahren synthetisiert indem die Reaktanden in einem molaren Verhältnis von PPG : 4,4'-MDI : IS = 1 :4,7 :3,7, entsprechend einem Anteil an Hartsegmenten von 88,1 Masse-% bzw. einem Anteil an Weichsegmenten von 11,9 Masse-%, zur Reaktion gebracht werden.

Wie aus dem in der Fig. 1 gezeigten Ergebnis einer thermogravimetrischen Analyse ersichtlich, weist das in der obigen Weise synthetisierte Polyether-Polyurethan mit Formgedächtniseigenschaften eine thermische Beständigkeit von etwa 260°C auf. Ausweislich des DSC-Diagramms gemäß der Fig. 5 besitzt das Polyether-Polyurethan mit Formgedächtniseigenschaften eine für seine Schalttemperatur repräsentative Glasübergangstemperatur im Bereich von etwa 122°C. Dies entspricht im Wesentlichen dem mittels dynamisch-mechanischer Analyse ermittelten tan 5-Peak bei einer Glasübergangstemperatur von etwa 124,6°C (vgl. die Fig. 6), wobei sich der Verlustfaktor tan δ aus dem Verhältnis von Verlust- und Speichermodul ergibt.

Aus dem Polyether-Polyurethan mit Formgedächtniseigenschaften wurden plattenförmige Proben mit den Abmessungen 10 mm x 20 mm x 2 mm erstellt und zur Programmierung in eine um 180° umgebogene temporäre Form gebracht. Beim Erwärmen auf die Schalttemperatur (siehe oben) wurden Rückstellkräfte von mehr als 3 N nachgewiesen (vgl. die mittels dynamisch-mechanischer Analyse ermittelte Kurve der Kraft [N] gemäß der Fig. 2). Es wird vermutet, dass diese vergleichsweise hohen Rückstellkräfte auf einen ausgeprägten Sprung im Speichermodul zurückzuführen sind (hier: von 2,4 GPa bei 23°C auf weniger als 15 MPa bei Temperaturen von oberhalb 140°C; vgl. die Fig. 3), was einem Schaltfaktor von etwa 160 entspricht.

Wie sich aus der Fig. 4 ergibt, wurden die thermomechanischen Eigenschaften des Polyether-Polyurethans mit Formgedächtniseigenschaften untersucht, indem ein hieraus erzeugter Probekörper mehrfach programmiert verformt wurde, wonach jeweils der Formgedächtniseffekt ausgelöst wurde, indem der Probekörper auf die Glasübergangs- bzw. Schalttemperatur (siehe oben) des Formgedächtnispolymers erwärmt wurde. Hierbei konnte der Probekörper mehrfach mit einer Dehnung von mindestens 100% in eine temporäre Form verformt werden, wonach er durch Auslösen des Formgedächtniseffektes jeweils in die permanente Form zurückgestellt werden konnte.

### Beispiel 2:

Herstellung eines thermoplastischen Polyurethans mit Formgedächtniseigenschaften und mit thermoresponsiven Eigenschaften mit einer Schalttemperatur im Bereich von etwa 146°C bis 147°C:

| | |
|---|---|
| Hartsegmente: | Polyurethaneinheiten, welche durch Polyaddition eines Diisocyanates in Form von 4,4'-Methylendiphenyldiisocyanat (4,4'-MDI) mit einem als Kettenverlängerer dienenden Diol in Form von Isosorbid (IS, 1,4:3,6-Dianhydro-D-sorbitol) erhalten worden sind; |
| Weichsegmente: | Poly(hexamethylencarbonat)einheiten, welche durch Polyaddition von Poly(hexamethylen-carbonat)diol (PHC) mit den Isocyanatgruppen der Hartsegmente unter Bildung von Urethangruppen verbunden sind, mit einer zahlenmäßig mittleren Molmasse von etwa 1000 g/mol. |

Das thermoplastische Polyurethan mit Formgedächtniseigenschaften wird nach dem Prepolymerverfahren synthetisiert indem die Reaktanden in einem molaren Verhältnis von PHC : 4,4'-MDI : IS = 1 :10,5 :9,5, entsprechend einem Anteil an Hartsegmenten von 95 Masse-% bzw. einem Anteil an Weichsegmenten von 5 Masse-%, zur Reaktion gebracht werden.

Wie aus dem in der Fig. 1 gezeigten Ergebnis einer thermogravimetrischen Analyse ersichtlich, weist das in der obigen Weise synthetisierte Polyurethan mit Formgedächtniseigenschaften, etwa entsprechend jenem des obigen Beispiels 1, eine thermische Beständigkeit von etwa 260°C auf. Ausweislich des DSC-Diagramms gemäß der Fig. 8 besitzt das Polyurethan mit Formgedächtniseigenschaften eine für seine Schalttemperatur repräsentative Glasübergangstemperatur im Bereich von etwa 147°C. Dies entspricht im Wesentlichen dem mittels dynamisch-mechanischer Analyse ermittelten tan δ-Peak bei einer Glasübergangs- bzw. Schalttemperatur von etwa 146,0°C (vgl. die Fig. 9).

Wie aus der Fig. 7 hervorgeht, wurden aus dem thermoplastischen Formgedächtnispolymer stabförmige Probekörper erzeugt, welche mit einer Dehnung von 100% programmiert in eine temporäre Form verformt wurden. Beim Erwärmen auf die Schalttemperatur (siehe oben) zum Auslösen des Formgedächtniseffektes bzw. Rückstellen in die permanente Form wurde eine sehr hohe Rückstellspannung von etwa 23,5 MPa ermittelt.

### Beispiel 3:

Herstellung eines thermoplastischen Polyurethans mit Formgedächtniseigenschaften und mit thermoresponsiven Eigenschaften mit einer Schalttemperatur im Bereich von etwa 120°C bis 121°C:

| | |
|---|---|
| Hartsegmente: | Polyurethaneinheiten, welche durch Polyaddition eines Diisocyanates in Form von 4,4'-Methylendiphenyldiisocyanat (4,4'-MDI) mit einem als Kettenverlängerer dienenden Diol in Form von Isosorbid (IS, 1,4:3,6-Dianhydro-D-sorbitol) erhalten worden sind; |
| Weichsegmente: | Poly(hexamethylencarbonat)einheiten, welche durch Polyaddition von Poly(hexamethylen-carbonat)diol (PHC) mit den Isocyanatgruppen der Hartsegmente unter Bildung von Urethangruppen verbunden sind, mit einer zahlenmäßig mittleren Molmasse von etwa 500 g/mol. |

Das thermoplastische Polyurethan mit Formgedächtniseigenschaften wird nach dem Prepolymerverfahren synthetisiert, indem die Reaktanden in einem molaren Verhältnis von PHC : 4,4'-MDI : IS = 1 :3,35 :2,33, entsprechend einem Anteil an Hartsegmenten von etwa 70 Masse-% bzw. einem Anteil an Weichsegmenten von etwa 30 Masse-%, zur Reaktion gebracht werden.

Wie aus dem in der Fig. 10 dargestellten Ergebnis einer thermogravimetrischen Analyse ersichtlich, weist das in der obigen Weise synthetisierte Polyurethan mit Formgedächtniseigenschaften, gemäß dem Beispiel 3 eine thermische Beständigkeit von etwa 275°C auf. Ausweislich des DSC-Diagramms gemäß der Fig. 11 besitzt das Polyurethan mit Formgedächtniseigenschaften einen für seine Schalttemperatur repräsentativen Glasübergangstemperaturbereich im Bereich von etwa 95°C bis etwa 125°C. Dies entspricht im Wesentlichen dem mittels dynamisch-mechanischer Analyse ermittelten tan δ-Peak bei einer Glasübergangs- bzw. Schalttemperatur von etwa 120,8°C (vgl. die Fig. 13). Aus dem DSC-Diagramm gemäß Fig. 12 geht ferner hervor, dass der Schmelzübergangstemperaturbereich der Hartsegmente im Bereich von etwa 207,4°C bis etwa 255°C beträgt, also etwa 20°C bis 65°C unterhalb seiner thermischen Beständigkeit.

Wie der Fig. 13 zu entnehmen ist, wurden die thermomechanischen Eigenschaften des Polycarbonat-Polyurethans mit Formgedächtniseigenschaften untersucht, indem ein hieraus erzeugter Probekörper mehrfach programmiert verformt wurde, wonach jeweils der Formgedächtniseffekt ausgelöst wurde, indem der Probekörper auf die Glasübergangs- bzw. Schalttemperatur (siehe oben) des Formgedächtnispolymers erwärmt wurde. Hierbei konnte der Probekörper mehrfach mit einer Dehnung von mindestens 100% in eine temporäre Form verformt werden, wonach er durch Auslösen des Formgedächtniseffektes jeweils in die permanente Form zurückgestellt werden konnte. Die Formfixierbarkeit im zweiten Zyklus betrug etwa 99%; die Formrückstellbarkeit im zweiten Zyklus betrug etwa 80%.

Aus dem thermoplastischen Polycarbonat-Polyurethan mit Formgedächtniseigenschaften gemäß dem Beispiel 3 wurden ferner mittels eines 3D-Druckers jeweils Probekörper in Form von Stäben (vgl. die Fig. 15) sowie in Form von Ringen (vgl. die Fig. 16) gedruckt, wobei jeweils eine Düsentemperatur von etwa 190°C, also etwa 17°C unterhalb der unteren Grenztemperatur des Schmelzübergangstemperaturbereiches der Hartsegmente von 207,4°C (vgl. die Fig. 12), eingestellt wurde, was etwa der geringstmöglichen Temperatur entspricht, bei welcher dieses Formgedächtnispolymer nach additiv mittels 3D-Druckens verarbeitbar ist. Die Geschwindigkeit des Druckkopfes in Bezug auf das Druckbett wurde jeweils auf 10 mm/s eingestellt. Die Temperatur des Druckbettes wurde zwecks Erzielung eines hohen Temperaturgradienten zur "schnellen" Abkühlung der aus der Düse ausgebrachten Polymerstränge zwischen 0°C, 50°C und 90°C variiert, wobei diese Temperaturen alle unterhalb des Glasübergangstemperaturbereiches der Weichsegmente von etwa 95°C bis etwa 125°C (vgl. die Fig. 11) bzw. der Schalttemperatur von etwa 120,8°C (vgl. die Fig. 13) liegen.

In den Fig. 15 und 16 (jeweils die oberen Abbildungen) sind fotografische Ansichten von in der obigen Weise gedruckten und in situ in eine temporäre Form programmierten Probekörpern wiedergegeben.

Diese Probekörper wurden zur Auslösung des Formgedächtniseffektes anschließend über einen Zeitraum von 15 min auf etwa 140°C, also auf etwa 19°C oberhalb der Schalttemperatur (vgl. die Fig. 13), erwärmt, woraufhin eine Formrückstellung der Polymer-Formteile um mehr als 50% ihrer anfänglichen Abmessungen festgestellt wurde (vgl. die Fig. 15 und 16, jeweils die unteren Abbildungen). Die Formrückstellung war bei den gewählten Druckbetttemperaturen von 0°C, 50°C, und 90°C ähnlich ausgeprägt, so dass weitere Ansichten entbehrlich sind.

## Patentansprüche

1. Thermoplastisches Polymer mit Formgedächtniseigenschaften, enthaltend:
(a) Hartsegmente, welche
- Polyurethaneinheiten enthalten, welche durch Polyaddition der Isocyanatgruppen wenigstens eines Diisocyanates mit den Hydroxygruppen wenigstens eines als Kettenverlängerer dienenden Di-, Tri- und/oder Polyols unter Bildung von Urethangruppen erhalten worden sind, und/oder
- Polyharnstoffeinheiten enthalten, welche durch Polyaddition der Isocyanatgruppen wenigstens eines Diisocyanates mit den Aminogruppen wenigsstens eines als Kettenverlängerer dienenden Di-, Tri- und/oder Polyamins unter Bildung von Harnstoffderivatgruppen erhalten worden sind;
(b) Weichsegmente, welche
- Polyethereinheiten enthalten, wobei die Polyethereinheiten durch Polyaddition von entsprechenden Polyetherdiolen, -triolen und/oder -polyolen mit den Isocyanatgruppen des wenigstens einen Diisocyanates der Hartsegmente unter Bildung von Urethangruppen mit den Hartsegmenten verbunden sind, und/oder
- Polycarbonateinheiten enthalten, wobei die Polycarbonateinheiten durch Polyaddition von entsprechenden Polycarbonatdiolen mit den Isocyanatgruppen der Hartsegmente unter Bildung von Urethangruppen verbunden sind,
wobei der Anteil an Hartsegmenten des thermoplastischen Polymers mit Formgedächtniseigenschaften wenigstens 50 Mass.-% beträgt, wobei wenigstens ein als Kettenverlängerer dienendes
- Di-, Tri- und/oder Polyol und/oder
- Di-, Tri- und/oder Polyamin
der Hartsegmente von einer cyclischen, heterocyclischen und/oder aromatischen Verbindung gebildet ist, und wobei die Schalttemperatur des thermoplastischen Polymers mit Formgedächtniseigenschaften wenigstens 90°C beträgt.

2. Thermoplastisches Polymer mit Formgedächtniseigenschaften nach Anspruch 1, **dadurch gekennzeichnet, dass** der Anteil an Hartsegmenten
- wenigstens 60 Mass.-%, insbesondere wenigstens 70 Mass.-%, vorzugsweise wenigstens 80 Mass.-%, und/oder
- höchstens 98,5 Mass.-%, insbesondere höchstens 97,5 Mass.-%, vorzugsweise höchstens 96,5 Mass.-%,
beträgt.

3. Thermoplastisches Polymer mit Formgedächtniseigenschaften nach Anspruch 1 oder 2, **dadurch gekennzeichnet, dass**
(a) wenigstens ein als Kettenverlängerer dienendes Di-, Tri- und/oder Polyol der Hartsegmente aus der Gruppe
- der Dianhydrohexitole, insbesondere aus der Gruppe Isosorbid (1,4:3,6-Dianhydro-D-sorbitol), Isomannid (1,4:3,6-Dianhydro-D-mannitol) und Isoidid (1,4:3,6-dianhydro-L-iditol),
- der Dihydroxybenzole, wie 1,2-Dihydroxybenzol (Brenzcatechin, 1,3-Dihydroxybenzol (Resorcin) und 1,4-Dihydroxybenzol (Hydrochinon),
- der Trihydroxybenzole, wie 1,3,5-Trihydroxybenzol (Phloroglucin), 1,2,4-Trihydroxybenzol (Hydroxyhydrochinon) und 1,2,3-Trihydrobenzol (Pyrogallol),
- der aliphatischen cyclischen Diole, insbesondere mit wenigstens einem C₅- und/oder C₆-Ring, vorzugsweise aus der Gruppe cis-1,2-Cyclohexandiol, trans-1,2-Cyclohexandiol, cis-1,3-Cyclohexandiol, trans-1,3-Cyclohexandiol, cis-1,4-Cyclohexandiol, trans-1,4-Cyclohexandiol, cis-1,2-Cyclopentan-diol, trans-1,2-Cyclopentandiol, cis-1,3-Cyclo-pentandiol, trans-1,3-Cyclopentandiol und 1,3-Cyclopent-4-endiol,
- der Tetrahydrofuran-basierten heterocyclischen Diole, insbesondere Tetrahydrofuran-2,5-di-methanol und Tetrahydrofuran-2,5-diethanol,
- der Di- und Trihydroxybenzoesäuren, insbesondere 3,4,5-Trihydroxybenzoesäure (Gallussäure),
- der aromatischen Di-, Tri- und Polyole mit wenigstens 2 Benzolringen, insbesondere 3,3',4',5,7-Pentahydroxyflavon (Quercetin),
- der Polyphenole mit wenigstens zwei Hydroxygruppen, insbesondere trans-3,5,4'-Trihydroxystilben (Resveratrol),
- der Catechine mit wenigstens zwei Hydroxygruppen, und
- der alkylamin- oder alkanolaminsubstituierten Dihydroxybenzole, insbesondere aus der Gruppe 4-(2-Aminoethyl)benzol-1,2-diol (Dopamin) und (R)-3,4-Dihydroxyphenylethanolamin (Noradrenalin),
und/oder
(b) wenigstens ein als Kettenverlängerer dienendes Di-, Tri- und/oder Polyamin der Hartsegmente aus der Gruppe
- der Diaminobenzole, wie 1,2-Diaminobenzol (o-Phenylendiamin), 1,3-Diaminobenzol (m-Phenylendiamin) und 1,4-Diaminobenzol (m-Phenylendiamin),
- der Triaminobenzole, wie 1,3,5-Triaminobenzol, 1,2,4-Triaminobenzol und 1,2,3-Triaminobenzol,
- der aliphatischen cyclischen Diamine, insbesondere mit wenigstens einem C₅- und/oder C₆-Ring, vorzugsweise aus der Gruppe 1,3-Diaminocyclohexan, 1,4-Diaminocyclohexan, 2,4-Diaminocyclohexan, 2,6-Diamino-1-methyl-cyclohexan, 1,3-Diaminomethylcyclohexan, 3-Aminomethyl-3,5,5-trimethyl-cyclohexylamin, 4,4'-Diaminodicyclohexylmethan, 3,3"-Dimethyl-4,4'-diaminodicyclohexylmethan und 3-Aminomethyl-3,5,5-trimethylcyclohexylamin (Isophorondiamin),
- der Tetrahydrofuran-basierten heterocyclischen Diamine, insbesondere 2,5-Furandimethanamin (2,5-Bis(Aminomethyl)furan), 2,5-Furandiethanamin (2,5-Bis(aminoethyl)furan) und [2-Amino-1-(furan-2-yl)ethyl]dimethylamin, und
- der Stickstoff-basierten heterocyclischen Diaminverbindungen, insbesondere aus der Gruppe Porphyrin (Porphin) und 7,8-Dihydroporphyrin (Chlorin),
einschließlich Mischungen hiervon gewählt ist.

4. Thermoplastisches Polymer mit Formgedächtniseigenschaften nach einem der Ansprüche 1 bis 3, **dadurch gekennzeichnet, dass** das Diisocyanat der Hartsegmente
- von einer cyclischen, heterocyclischen und/oder aromatischen Verbindung gebildet ist; und/oder
- aus der Gruppe der Methylendiphenyldiisocyanate (MDI), insbesondere aus der Gruppe Diphenylmethan-2,2'-diisocyanat (2,2'-MDI), Diphenylmethan-2,4'-diisocyanat (2,4'-MDI), Diphenylmethan-4,4'-diisocyanat (4,4'-MDI) einschließlich deren Isomeren und Isomerengemische, Isophorondiisocyanat (IPDI), 4,4'-Diisocyanatodicyclohexylmethan (H₁₂MDI), Isomeren oder Isomerengemische der Toluendiisocyanate (TDI) oder Mischungen hiervon, gewählt ist.

5. Thermoplastisches Polymer mit Formgedächtniseigenschaften nach einem der Ansprüche 1 bis 4, **dadurch gekennzeichnet, dass**
(a) die Hartsegmente eine mittlere Molmasse von wenigstens 550 g/mol, insbesondere von wenigstens 750 g/mol, vorzugsweise von wenigstens 1000 g/mol, und/oder
(b) das gesamte Molekül des thermoplastischen Polymers mit Formgedächtniseigenschaften eine mittlere Molmasse
- von wenigstens 650 g/mol, insbesondere von wenigstens 1000 g/mol, vorzugsweise von wenigstens 2000 g/mol, und/oder
- von höchstens 500000 g/mol, insbesondere von höchstens 350000 g/mol, vorzugsweise von höchstens 200000 g/mol.

6. Thermoplastisches Polymer mit Formgedächtniseigenschaften nach einem der Ansprüche 1 bis 5, **dadurch gekennzeichnet, dass**
(a) die Polyethereinheiten der Weichsegmente
- Polyalkylenglycoleinheiten, insbesondere aus der Gruppe Polyethylen- (PEG), Polypropylen- (PPG) und Polybutylenglycoleinheiten (PBG), und/oder
- Polytetrayhydrofuraneinheiten (PTHF), und/oder
(b) die Polycarbonateinheiten der Weichsegmente Polyalkylencarbonateinheiten, wie Poly(hexamethylen-carbonat)einheiten (PHC),
enthalten.

7. Thermoplastisches Polymer mit Formgedächtniseigenschaften nach einem der Ansprüche 1 bis 6, **dadurch gekennzeichnet, dass** die Weichsegmente eine mittlere Molmasse von
- wenigstens 100 g/mol, insbesondere von wenigstens 150 g/mol, vorzugsweise von wenigstens 200 g/mol, und/oder
- höchstens 10000 g/mol, insbesondere von höchstens 5000 g/mol, vorzugsweise von höchstens 3000 g/mol,
aufweisen.

8. Thermoplastisches Polymer mit Formgedächtniseigenschaften nach einem der Ansprüche 1 bis 7, **dadurch gekennzeichnet, dass** es
- eine Schalttemperatur von wenigstens 100°C, insbesondere von wenigstens 110°C, vorzugsweise von wenigstens 120°C; und/oder
- eine thermische Beständigkeit von wenigstens 200°C, insbesondere von wenigstens 220°C, vorzugsweise von wenigstens 240°C,
aufweist.

9. Polymer-Formteil, welches wenigstens ein thermoplastisches Polymer mit Formgedächtniseigenschaften nach einem der Ansprüche 1 bis 8 oder einen Polymer-Blend mit wenigstens einem solchen Polymer enthält oder gänzlich hieraus gebildet ist, wobei die Schalttemperatur wenigstens 90°C beträgt.

10. Verfahren zur Herstellung eines Polymer-Formteils nach Anspruch 9, welches wenigstens ein thermoplastisches Polymer mit Formgedächtniseigenschaften nach einem der Ansprüche 1 bis 8 oder einen Polymer-Blend mit wenigstens einem solchen Polymer enthält oder gänzlich hieraus gebildet ist, indem das wenigstens eine thermoplastische Polymer mit Formgedächtniseigenschaften in einer Plastifiziereinheit plastifiziert und in wenigstens einer und/oder im Anschluss an wenigstens eine Austrittsdüse der Plastifiziereinheit zu dem Polymer-Formteil geformt wird, wobei das wenigstens eine thermoplastische Polymer mit Formgedächtniseigenschaften sowohl in der Plastifiziereinheit als auch in der wenigstens einen Austrittsdüse auf eine maximale Temperatur unterhalb der oberen Grenztemperatur des Schmelzübergangstemperaturbereiches seiner Hartsegmente erwärmt wird, so dass die Hartsegmente nicht vollständig aufgeschmolzen werden, wonach das wenigstens eine plastifizierte thermoplastische Polymer mit Formgedächtniseigenschaften aus der wenigstens einen Austrittsdüse der Plastifiziereinheit ausgebracht, zu dem Polymer-Formteil geformt und auf eine Temperatur unterhalb der Schalttemperatur abgekühlt wird, um das wenigstens eine thermoplastische Polymer mit Formgedächtniseigenschaften gemeinsam mit der Erzeugung des Polymer-Formteils in einem temporären Formzustand zu programmieren.

11. Verfahren nach Anspruch 10, **dadurch gekennzeichnet, dass** das wenigstens eine thermoplastische Polymer mit Formgedächtniseigenschaften sowohl in der Plastifiziereinheit als auch in der wenigstens einen Austrittsdüse auf eine maximale Temperatur erwärmt wird, welche höchstens einem Temperatur-Peak des Schmelzübergangstemperaturbereiches seiner Hartsegmente in einem mittels dynamischer Differenzkalorimetrie (differential scanning calometry, DSC) erhaltenen DSC-Thermogramm bei der Erwärmung entspricht, wobei das wenigstens eine thermoplastische Polymer mit Formgedächtniseigenschaften sowohl in der Plastifiziereinheit als auch in der wenigstens einen Austrittsdüse insbesondere auf eine maximale Temperatur erwärmt wird, welche unterhalb der unteren Grenztemperatur des Schmelzübergangstemperaturbereiches seiner Hartsegmente liegt.

12. Verfahren nach Anspruch 10 oder 11, **dadurch gekennzeichnet, dass** die wenigstens eine Austrittsdüse der Plastifiziereinheit während des Ausbringens des wenigstens einen plastifizierten thermoplastischen Polymers mit Formgedächtniseigenschaften mit einer Geschwindigkeit
- von wenigstens 1 mm/s, insbesondere von wenigstens 2 mm/s, vorzugsweise von wenigstens 5 mm/s; und/oder
- von höchstens 80 mm/s, insbesondere von höchstens 60 mm/s, vorzugsweise von höchstens 40 mm/s,
bewegt wird.

13. Verfahren nach einem der Ansprüche 10 bis 12, **dadurch gekennzeichnet, dass** das wenigstens eine thermoplastische Polymer mit Formgedächtniseigenschaften während und/oder nach seinem Ausbringen aus der wenigstens einen Austrittsdüse der Plastifiziereinheit auf einer Temperatur im Bereich oder oberhalb der Schalttemperatur gehalten und verformt wird, um es unter Einwirkung von mechanischen Kräften oder Spannungen zusätzlich in einem temporären Formzustand zu programmieren, wonach es auf eine Temperatur unterhalb der Schalttemperatur abgekühlt wird.

14. Verfahren nach einem der Ansprüche 10 bis 13, **dadurch gekennzeichnet, dass** das programmierte Formrückstellvermögen des wenigstens einen thermoplastischen Polymers mit Formgedächtniseigenschaften durch Steuerung wenigstens eines Parameters aus der Gruppe
- in der Plastifiziereinheit eingestellte Temperatur,
- Temperatur der wenigstens einen Austrittsdüse der Plastifiziereinheit,
- Geschwindigkeit der wenigstens einen Austrittsdüse während des Ausbringens des wenigstens einen thermoplastischen Polymers mit Formgedächtniseigenschaften,
- Temperaturgradient während des Abkühlens des wenigstens einen thermoplastischen Polymers mit Formgedächtniseigenschaften,
- im Innern der Plastifiziereinheit eingestellter Druck,
- Art und/oder Menge an dem wenigstens einen thermoplastischen Polymer mit Formgedächtniseigenschaften zugesetzten, Wärmestrahlung absorbierenden und/oder thermisch leitfähigen Additiven,
eingestellt wird.

15. Verfahren nach einem der Ansprüche 10 bis 14, **dadurch gekennzeichnet, dass** das wenigstens eine thermoplastische Polymer mit Formgedächtniseigenschaften in einer Plastifiziereinheit eines 3D-Druckers plastifiziert, mittels wenigstens einer Austrittsdüse in Form eines in Bezug auf einen Drucktisch gesteuert relativbewegbaren Druckkopfes des 3D-Druckers aus der Plastifiziereinheit ausgebracht und schichtweise unter Bildung des Polymer-Formteils abgeschieden wird, wonach die mittels der Austrittsdüse(n) des Druckkopfes schichtweise ausgebrachten Plastifikatstränge auf eine Temperatur unterhalb der Schalttemperatur abgekühlt werden.
